(19) **Europäisches Patentamt / European Patent Office / Office européen des brevets**

(11) **EP 2 017 172 A1**

(12) **EUROPEAN PATENT APPLICATION**
published in accordance with Art. 153(4) EPC

(43) Date of publication:
**21.01.2009 Bulletin 2009/04**

(21) Application number: **07738651.4**

(22) Date of filing: **15.03.2007**

(51) Int Cl.:
*B62K 17/00* (2006.01)    *B60L 15/20* (2006.01)
*B62K 3/00* (2006.01)    *G05D 1/08* (2006.01)

(86) International application number:
**PCT/JP2007/055201**

(87) International publication number:
**WO 2007/129505 (15.11.2007 Gazette 2007/46)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **09.05.2006 JP 2006130644**
          **12.06.2006 JP 2006162402**
          **12.06.2006 JP 2006162403**

(71) Applicant: **Equos Research Co., Ltd.**
**Tokyo 101-0021 (JP)**

(72) Inventors:
• **DOI, Katsunori**
  **Tokyo 101-0021 (JP)**
• **ANDO, Masao**
  **Tokyo 101-0021 (JP)**
• **SAWADA, Kazuaki**
  **Tokyo 101-0021 (JP)**
• **MIKI, Nobuaki**
  **Tokyo 101-0021 (JP)**

(74) Representative: **TBK-Patent**
**Bavariaring 4-6**
**80336 München (DE)**

(54) **VEHICLE, CHARACTERISTIC VALUE ESTIMATING DEVICE, AND LOADED ARTICLE DETERMINATION DEVICE**

(57) A vehicle whose attitude can be controlled even if the position of the actual center of gravity of the vehicle is not aligned with the position of the designed center of gravity or moved. The effect of the displacement of the actual center of gravity of the vehicle from the designed center of gravity is detected as the torque value produced by the displacement of the center of gravity of the vehicle as shown in Figs. 1 (a), 1(b). As shown in Figs. 1 (c) to 1(e), the displacement of the center of gravity of the vehicle is corrected according to the detected torque value due to one of the correction of body reference angle, movement of balancer, and movement of seat so that the actual center of gravity of the vehicle is aligned with the design center of gravity of the vehicle.

SENSING: DETECTION OF EFFECT OF DISPLACEMENT OF CENTER OF GRAVITY

FIG. 1A — DIRECT MEASUREMENT WITH MEASURING INSTRUMENT LOAD METER

FIG. 1B — ESTIMATION BASED ON RESULTS OF CONTROL (HISTORY)

LOAD METER

REACTION: COUNTERMEASURE AGAINST DISPLACEMENT OF CENTER OF GRAVITY

FIG. 1C — CORRECTION OF MAIN BODY REFERENCE ANGLE

REFERENCE AXIS

FIG. 1D — USE OF BALANCER

BALANCER

EP 2 017 172 A1

**Description**

TECHNICAL FIELD

The present invention relates to a vehicle, a characteristic value estimating device, and a loaded article determination device, and for example, to a vehicle using attitude control of an inverted pendulum.

BACKGROUND ART

A vehicle using attitude control of an inverted pendulum (hereinafter called simply "inverted pendulum vehicle") has been gathering attention and is currently being put into practice.
For example, Patent Document 1 proposes a technology in which two drive wheels are coaxially arranged to perform driving by detecting the attitude of the drive wheels affected by a movement of the center of gravity of a driver.
In addition, Patent Document 2 proposes a vehicle that moves while controlling the attitude of one related-art circular drive wheel or one spherical drive wheel, and also describes various types of inverted pendulum vehicles.
Patent Document 1: Japanese Patent Application Publication No. JP-A-2004-276727
Patent Document 2: Japanese Patent Application Publication No. JP-A-2004-129435

The vehicle as described above maintains a stationary state thereof or runs while performing attitude control based on the weight transfer due to movement of the driver's body, the amount of operation transmitted from a remote controller or an operating unit, the driving data entered in advance, or the like.
The attitude control as described above is performed using control parameters of the attitude control system that are predefined using the position of the center of gravity in design (designed center of gravity of vehicle) derived from the vehicle body weight and the position of the center of gravity of the vehicle body, and from the model weight and the position of the center of gravity of the model assumed as a general weight body (for example, luggage or rider).
Then, in the case that a line connecting an axle and the designed center of gravity is assumed to be a reference axis, the tilt angle of the reference axis is detected by a tilt angle meter, and the attitude is controlled so that the tilt angle of the reference axis coincides with a reference angle (target angle relative to a vertical line). For example, in the stationary state of the vehicle, the reference angle is made to be zero (the reference axis is made to coincide with the vertical line), and if the tilt angle meter has detected an angle θ, a torque is applied so that the tilt angle of the reference axis is made to be zero, thus controlling the attitude.

DISCLOSURE OF THE INVENTION

[Problem to be Solved by the Invention]

The above-described attitude control to make the tilt angle of the reference axis coincide with the reference angle is based on the assumption that the position of the designed center of gravity of the vehicle is aligned with the position of the actual center of gravity of the vehicle (actual center of gravity formed by the vehicle body and the weight body such as a person or luggage).
However, the actual center of gravity is often displaced from the designed center of gravity because the conditions of the actual weight body differ from those of the assumed model due to causes such as (1) different sitting position, (2) different or changing sitting posture, and (3) different body weight or body shape.
The tilt angle meter cannot detect the displacement of the position of the center of gravity.
As a result, if the actual center of gravity is displaced or moved forward from the designed center of gravity, the vehicle generally moves forward while leaning forward, resulting in unsuccessful attitude control.
Besides, because the vehicle actually takes on a person of varying body weight and body shape, or luggage of varying weight and shape (hereinafter called "weight body"), the mass, height of center of gravity, and moment of inertia of the vehicle largely vary depending on the rider, and so on, resulting in deviations of characteristic values of the attitude control system from design values.
In addition, the weight body on board is not always kept in a constant state, but the posture of the rider may change (by moving, leaning, etc.), or the amount of the luggage may be increased. Also thereby, the mass, height of center of gravity, and moment of inertia (hereinafter called "mechanical characteristic values") vary, resulting in deviations of the once designed characteristic values of the attitude control system from the design values.
Besides, in the vehicle using the attitude control with an inverted pendulum assumed in this embodiment, the smaller and lighter the vehicle body is and the higher the loading portion is, the larger the relative influence of change in the loaded article is on the control system characteristics.

Consequently, the control parameters based on the rider assumed at design stage become unable to provide stable attitude control, thus becoming unable to provide the rider with a comfortable ride, resulting in the necessity of correction of the control parameters.

Then, it becomes necessary to know the actual mechanical characteristic values of the weight body (loaded article) and the type of the weight body (person, luggage, etc.), as a prerequisite to the correction of the control parameters.

Therefore, it is a first object of the present invention to provide a vehicle that is capable of performing attitude control even if the position of the actual center of gravity of the vehicle is not aligned with or is moved from the position of the designed center of gravity of the vehicle.

Further, it is a second object of the present invention to provide a vehicle that is capable of performing attitude control suitable for the state of a weight body loaded on the vehicle.

Moreover, it is a third object of the present invention to provide a parameter estimating device that estimates actual mechanical characteristic values of the weight body loaded on the vehicle.

Furthermore, it is a fourth object of the present invention to provide a loaded article determination device that determines the weight body loaded on the vehicle based on the estimated mechanical characteristic values.

[Means for Solving the Problem]

(1) In order to achieve the first object, the invention according to claim 1 provides a vehicle, having a single axle arranged with drive wheels and controlling attitude of a vehicle body, that includes displacement amount calculation means for calculating a physical quantity corresponding to an amount of displacement of an actual center of gravity of the vehicle that is a center of gravity of the vehicle in reality, from a reference axis connecting a designed center of gravity of the vehicle defined in design with the axle, and also includes center-of-gravity position control means for moving the position of the actual center of gravity of the vehicle so as to lie on the reference axis, based on the calculated physical quantity.

(2) The invention according to claim 2 is **characterized in that** the vehicle according to claim 1 further includes a loading portion for loading a weight body such as luggage or a rider, and a load sensor arranged at the loading portion, and the displacement amount calculation means calculates a torque value as a physical quantity corresponding to the amount of displacement of the actual center of gravity of the vehicle, from a detection value of the load sensor.

(3) The invention according to claim 3 is **characterized in that,** in the vehicle according to claim 1, the displacement amount calculation means calculates the torque value as a physical quantity corresponding to the amount of displacement of the actual center of gravity of the vehicle, with a disturbance observer.

(4) The invention according to claim 4 is **characterized in that,** in the vehicle according to claim 1, 2, or 3, the center-of-gravity position control means moves the actual center of gravity of the vehicle so as to lie on the reference axis by controlling a tilt angle of the vehicle body in response to the calculated physical quantity.

(5) The invention according to claim 5 is **characterized in that** the vehicle according to claim 1, 2, or 3 further includes a balancer that is movably arranged relative to the vehicle body, and the center-of-gravity position control means moves the actual center of gravity of the vehicle so as to lie on the reference axis by moving the balancer in response to the calculated physical quantity.

(6) The invention according to claim 6 is **characterized in that,** in the vehicle according to claim 1, 2, or 3, the vehicle body includes a main body and a loading portion that is movably arranged relative to the main body and that takes on a weight body such as luggage or a rider, and the center-of-gravity position control means moves the actual center of gravity of the vehicle so as to lie on the reference axis by moving the loading portion in response to the calculated physical quantity.

(7) The invention according to claim 7 is **characterized in that** the vehicle according to claim 1 further includes a loading portion for loading a weight body such as luggage or a rider, a load sensor arranged at the loading portion, first torque calculation means for calculating a torque value as a physical quantity corresponding to the amount of displacement of the actual center of gravity of the vehicle, from a detection value of the load sensor, and second torque calculation means for calculating a torque value as a physical quantity corresponding to the amount of displacement of the actual center of gravity of the vehicle, with a disturbance observer, and the displacement amount calculation means calculates a physical quantity corresponding to the amount of displacement of the actual center of gravity of the vehicle from the reference axis, based on the first and the second torque values calculated.

(8) The invention according to claim 8 is **characterized in that,** in the vehicle according to claim 1, the displacement amount calculation means calculates a physical quantity corresponding to the amount of displacement of the actual center of gravity of the vehicle from the reference axis, based on frequency components of the first and the second torque values calculated.

(9) The invention according to claim 9 is **characterized in that,** in the vehicle according to claim 1, 2, or 3, the center-of-gravity position control means includes first movement means for moving the actual center of gravity of the vehicle so as to lie on the reference axis by controlling a tilt angle of the vehicle body in response to a physical quantity, second movement means for moving the actual center of gravity of the vehicle so as to lie on the reference axis by moving the balancer that is movably arranged relative to the vehicle body in response to a physical quantity, third movement means for moving the actual center of gravity of the vehicle so as to lie on the reference axis by moving the loading portion relative to the vehicle main body in response to a physical quantity, and physical quantity distribution means for distributing the physical quantity calculated by the displacement amount calculation means to the first, second, and third movement means.

(10) The invention according to claim 10 is **characterized in that,** in the vehicle according to claim 9, the physical quantity distribution means distributes the physical quantity based on the frequency components of the physical quantity calculated by the displacement amount calculation means.

(11) In order to achieve the second object, the invention according to claim 11 provides a vehicle that controls attitude of a vehicle body. The vehicle includes estimation means for estimating actual mechanical characteristic values of a controlled target object in an attitude control system for the vehicle body, and control system characteristic value correction means for correcting control system characteristic values in the attitude control system, based on the actual mechanical characteristic values estimated.

(12) The invention according to claim 12 is **characterized in that,** in the vehicle according to claim 11, the estimation means estimates, as the mechanical characteristic values, a mass of a weight body such as luggage or a rider loaded on a loading portion, a height of center of gravity of the weight body, and a moment of inertia of the weight body.

(13) The invention according to claim 13 is **characterized in that** the vehicle according to claim 11 or 12 further includes a loading portion for loading a weight body such as luggage or a rider, a load sensor arranged at the loading portion, and a height sensor that measures a height of the weight body, and the estimation means estimates the mechanical characteristic values based on detection values of the load sensor and the height sensor.

(14) The invention according to claim 14 is **characterized in that,** in the vehicle according to claim 11 or 12, the estimation means estimates the mechanical characteristic values by using a disturbance observer.

(15) The invention according to claim 15 is **characterized in that** the vehicle according to claim 11 or 12 further includes a loading portion for loading a weight body such as luggage or a rider, a load sensor arranged at the loading portion, a height sensor that measures a height of the weight body, direct estimation means for estimating the mechanical characteristic values based on detection values of the load sensor and the height sensor, and indirect estimation means for estimating the mechanical characteristic values with a disturbance observer, and the estimation means estimates the mechanical characteristic values based on the estimated values by the direct estimation means and the indirect estimation means.

(16) The invention according to claim 16 is **characterized in that,** in the vehicle according to claim 15, the estimation means estimates the mechanical characteristic values based on frequency components of the estimated values by the direct estimation means and the indirect estimation means.

(17) The invention according to claim 17 is **characterized in that,** in the vehicle according to any one of claims 11 to 16, the control system characteristic value correction means corrects the control system characteristic values by changing control parameters in the attitude control system for the vehicle body in response to the mechanical characteristic values estimated.

(18) The invention according to claim 18 is **characterized in that,** in the vehicle according to any one of claims 11 to 16, the control system characteristic value correction means includes vehicle body deforming means for correcting the control system characteristic values by deforming a shape of the vehicle body in response to the mechanical characteristic values estimated.

(19) The invention according to claim 19 is **characterized in that,** in the vehicle according to any one of claims 11 to 16, the control system characteristic value correction means includes control parameter correction means for correcting the control system characteristic values by changing control parameters in the attitude control system for the vehicle body in response to the mechanical characteristic values estimated, vehicle body deforming means for correcting the control system characteristic values by deforming a shape of the vehicle body in response to the mechanical characteristic values estimated, and mechanical characteristic value distribution means for distributing the mechanical characteristic values estimated by the estimation means to the control parameter correction means and the vehicle body deforming means.

(20) The invention according to claim 20 is **characterized in that,** in the vehicle according to claim 19, the mechanical characteristic value distribution means distributes the mechanical characteristic values based on frequency components of the mechanical characteristic values estimated by the estimation means.

(21) The invention according to claim 21 is **characterized in that** the vehicle according to claim 18, 19, or 20 further includes a weight that is movably arranged relative to the vehicle body, and the vehicle body deforming means changes the shape of the vehicle body by moving the weight in response to the mechanical characteristic values estimated.

(22) In order to achieve the third object, the invention according to claim 22 provides a characteristic value estimating device that estimates mechanical characteristic values of a weight body mounted on a vehicle that controls attitude of a vehicle body. The characteristic value estimating device includes a loading portion for loading the weight body such as luggage or a rider, a load sensor arranged at the loading portion, a height sensor that measures a height of the weight body, and estimation means for estimating the mechanical characteristic values of the weight body based on measured values of the load sensor and the height sensor.

(23) In order to achieve the third object, the invention according to claim 23 provides a characteristic value estimating device that estimates mechanical characteristic values of a weight body mounted on a vehicle that controls attitude of a vehicle body. The characteristic value estimating device includes estimation means for estimating the mechanical characteristic values of the weight body by using a disturbance observer.

(24) In order to achieve the third object, the invention according to claim 24 provides a characteristic value estimating device that estimates mechanical characteristic values of a weight body mounted on a vehicle that controls attitude of a vehicle body. The characteristic value estimating device includes a loading portion for loading the weight body such as luggage or a rider, a load sensor arranged at the loading portion, a height sensor that measures a height of the weight body, direct estimation means for estimating the mechanical characteristic values based on measured values of the load sensor and the height sensor, indirect estimation means for estimating the mechanical characteristic values with a disturbance observer, and estimation means for estimating the mechanical characteristic values based on estimated values by the direct estimation means and the indirect estimation means.

(25) The invention according to claim 25 is **characterized in that** the characteristic value estimating device according to claim 24 further includes error determination means for determining an error in the estimated values by using both of the estimated values estimated by the direct estimation means and the indirect estimation means, and if one of the estimated values is determined to be erroneous, the estimation means estimates the other estimated value as a mechanical characteristic value.

(26) The invention according to claim 26 is **characterized in that,** in the characteristic value estimating device according to claim 24 or 25, the estimation means estimates the mechanical characteristic values based on frequency components of the estimated values by the direct estimation means and the indirect estimation means.

(27) The invention according to claim 27 is **characterized in that,** in the characteristic value estimating device according to any one of claims 22 to 26, the estimation means estimates, as the mechanical characteristic values, a mass of the weight body, a height of center of gravity of the weight body, and a moment of inertia of the weight body.

(28) The invention according to claim 28 is **characterized in that** the characteristic value estimating device according to claim 22 or 24 further includes an acceleration sensor, and a tilt angle sensor, and the estimation means or the direct estimation means estimates the mechanical characteristic values of the weight body based on the measured values of the load sensor and the height sensor, and also based on detected values of the acceleration sensor and the tilt angle sensor.

(29) In order to achieve the fourth object, the invention according to claim 29 provides a loaded article determination device that includes the characteristic value estimating device according to any one of claims 22 to 28, and type determination means for determining a type of the weight body mounted on the vehicle by using the mechanical characteristic values estimated by the characteristic value estimating device.

[Effects of the Invention]

(1) According to the present invention described in claims 1 to 10, even if the position of the actual center of gravity is not aligned with the position of the designed center of gravity in the initial state, or even if the actual center of gravity has been moved, the position of the actual center of gravity of the vehicle is moved so as to lie on the reference axis by calculating the physical quantity corresponding to the amount of displacement of the actual center of gravity of the vehicle that is a center of gravity of the vehicle in reality from the reference axis, thus enabling to perform the attitude control.

(2) According to the present invention described in claims 11 to 21, the actual mechanical characteristic values of the controlled target object in the attitude control system for the vehicle body are estimated to correct the control system characteristic values of the attitude control system, thus enabling to perform the attitude control appropriate to the loaded article.

(3) The mechanical parameters of the weight body can be estimated from the measured values of the mass and height of the weight body according to the invention described in claim 22, by the disturbance observer according to the invention described in claim 23, and both by the measured values of the mass and height of the weight body and by the disturbance observer according to the invention described in claim 24.

Hereby, according to the present invention, it is possible to estimate the actual mechanical parameters of the controlled target object in the attitude control system for the vehicle body based on the estimated mechanical parameters of the weight body, and then to correct the control parameters in the attitude control system, thus enabling to perform the more stable attitude control.

BRIEF DESCRIPTION OF THE DRAWINGS

[FIG. 1] FIG. 1 shows explanatory diagrams illustrating an outline of center-of-gravity displacement control according to a first embodiment.
[FIG. 2] FIG. 2 is an external configuration diagram of a vehicle according to the first embodiment.
[FIG. 3] FIG. 3 is a block diagram of a control unit.
[FIG. 4] FIG. 4 shows explanatory diagrams illustrating an arrangement of load meters.
[FIG. 5] FIG. 5 is a flow chart showing contents of the center-of-gravity displacement control.
[FIG. 6] FIG. 6 is an explanatory diagram showing a state of equilibrium of forces and moment of a weight body A acting on a loading portion.
[FIG. 7] FIG. 7 is an explanatory diagram conceptually showing a state of disturbance estimation by a disturbance observer.
[FIG. 8] FIG. 8 is an explanatory diagram illustrating a mechanical model taking into account movement of actual center of gravity of vehicle due to movement of a rider.
[FIG. 9] FIG. 9 is an explanatory diagram showing weightings for respective frequency components applied to both calculated torque values.
[FIG. 10] FIG. 10 is an explanatory diagram showing weightings for respective frequencies used for distributing a torque value Tf to center-of-gravity displacement correction mechanisms (systems) S1, S2, and S3.
[FIG. 11] FIG. 11 shows explanatory diagrams illustrating methods for correcting the displacement of center of gravity by the respective correction mechanisms (systems).
[FIG. 12] FIG. 12 shows explanatory diagrams illustrating other examples for correcting the displacement of the actual center of gravity of the vehicle by deforming the vehicle body.
[FIG. 13] FIG. 13 shows explanatory diagrams each illustrating calculation of amount of displacement in the right-and-left direction (lateral direction) and also shows mechanisms (systems) for correcting the displacement in response to calculated torque values.
[FIG. 14] FIG. 14 shows explanatory diagrams illustrating an outline of control system characteristic value correction processing that corrects the control system characteristic values to optimal values fitted to an actual vehicle state.
[FIG. 15] FIG. 15 is an external configuration diagram of a vehicle according to a second embodiment.
[FIG. 16] FIG. 16 is a block diagram of a control unit 16.
[FIG. 17] FIG. 17 shows explanatory arrangement diagrams illustrating an arrangement of a load meter and a sitting height meter.
[FIG. 18] FIG. 18 shows explanatory diagrams illustrating a weight arranged on a seat back.
[FIG. 19] FIG. 19 is a flow chart showing contents of the control system characteristic value correction processing.
[FIG. 20] FIG. 20 is an outline explanation diagram showing a flow of estimation of mechanical characteristic values.
[FIG. 21] FIG. 21 is an explanatory diagram conceptually showing a method for disturbance estimation by a disturbance observer.
[FIG. 22] FIG. 22 shows explanatory diagrams illustrating an example of selective use of mechanical characteristic values Pk and Pg.
[FIG. 23] FIG. 23 is an explanatory diagram concerning distribution of a determined mechanical characteristic value variation Pf.
[FIG. 24] FIG. 24 is an explanatory diagram conceptually showing correction of control parameters by a parameter changing system.

[Description of the Reference Numerals]

11 DRIVE WHEELS
12 DRIVE MOTOR
13 LOADING PORTION
131 SEATING FACE
14 SUPPORT MEMBER
16 CONTROL UNIT
20 CONTROL ECU
21 VEHICLE BODY BASIC CONTROL SYSTEM
22 CENTER-OF-GRAVITY DISPLACEMENT CONTROL SYSTEM (FIRST EMBODIMENT)
22 MECHANICAL CHARACTERISTIC VALUE ESTIMATION CONTROL SYSTEM (SECOND EMBODIMENT)
23 DISTURBANCE OBSERVER
24 CENTER-OF-GRAVITY DISPLACEMENT CALCULATION PORTION
30 OPERATING UNIT
40 SENSOR FOR RUNNING AND ATTITUDE CONTROL
41 RUNNING SPEED METER
42 VEHICLE BODY TILT ANGLE METER
50 SENSOR FOR CENTER-OF-GRAVITY DISPLACEMENT CONTROL (FIRST EMBODIMENT)
50 SENSOR FOR ESTIMATION OF MECHANICAL CHARACTERISTIC VALUES (SECOND EMBODIMENT)
51 LOAD METER
52 SITTING HEIGHT METER
60 ACTUATOR
61 TIRE ROTATION ACTUATOR
62 BALANCER DRIVE ACTUATOR (FIRST EMBODIMENT)
62 WEIGHT DRIVE ACTUATOR (SECOND EMBODIMENT)
63 SEAT DRIVE ACTUATOR
134 WEIGHT

BEST MODES FOR CARRYING OUT THE INVENTION

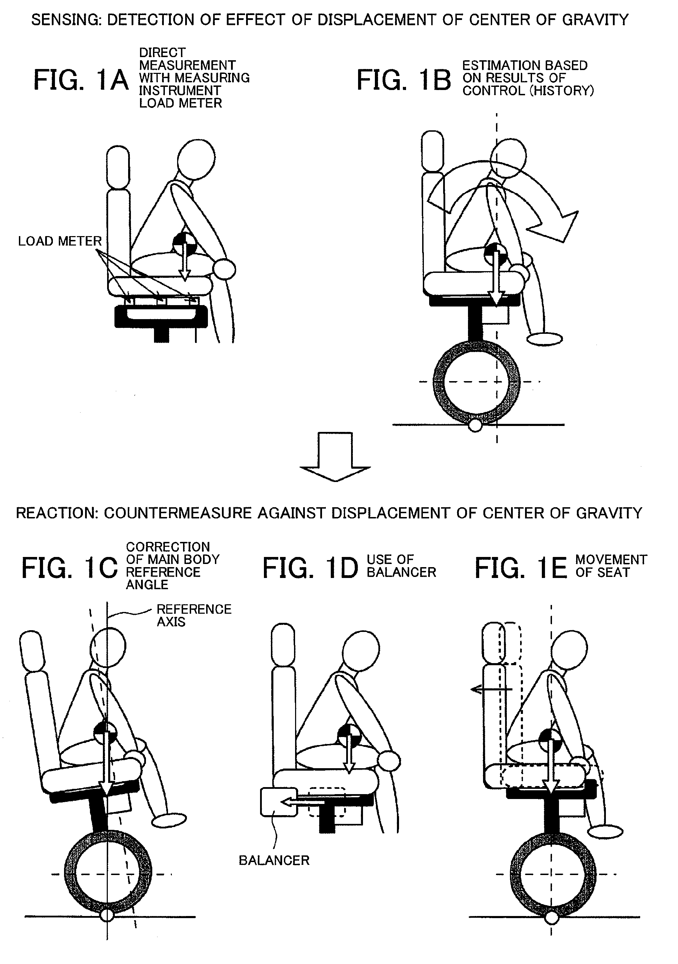

Preferred embodiments of a vehicle according to the present invention will be described in detail below with reference to FIGS. 1 to 13.

(1) Outline of First Embodiment

FIG. 1 shows an outline of center-of-gravity displacement control according to a first embodiment.
In the first embodiment, at first, an effect of displacement of an actual center of gravity of a vehicle from a designed center of gravity of the vehicle is detected as a torque value generated by the displacement of the center of gravity, as shown in FIGS. 1A and 1B.
Then, in response to the detected torque value, center-of-gravity displacement countermeasure control is performed by correcting a main body reference angle, by moving a balancer, or by moving a seat, so that the actual center of gravity of the vehicle is aligned with the designed center of gravity of the vehicle, as shown in FIGS. 1C to 1E.
FIG. 1A shows a method for directly measuring the effect of displacement of the center of gravity with measuring instruments, where a plurality of load meters are arranged under the seat, and a position of center of gravity and a weight of a rider portion are measured from a load distribution to calculate a position of center of gravity of the whole vehicle (actual center of gravity of the vehicle) (where a position of center of gravity of a vehicle body is already known), and further to calculate the value of the torque applied by the displacement of the center of gravity.
FIG. 1B shows a method for estimating the effect of displacement of the center of gravity based on results of control (history), where the displacement of the center of gravity is estimated based on the history of change in attitude of the vehicle body and of torque input.
That is, if the vehicle body is going to tilt (a tilting torque is applied) even though the tilt angle of a reference axis coincides with the reference angle (the control assumes no tilt), the actual center of gravity of the vehicle is considered to be displaced from the designed center of gravity of the vehicle. Therefore, the effect is estimated, for example, as a disturbance torque by a disturbance observer.
Against the torque value thus calculated as an amount of effect of the displacement of the center of gravity, the center-of-gravity displacement countermeasure control is performed so as to align the actual center of gravity of the vehicle with the designed center of gravity of the vehicle by correcting the main body reference angle, by using the balancer, or by moving the seat (rider loading portion).
FIG. 1C shows the control by correcting the main body reference angle, where a tilt angle of the vehicle body when the actual center of gravity of the vehicle lies on the reference axis is set as the reference (target) angle, and the vehicle body is tilted to obtain an equilibrium state by controlling the angle to be close to the reference angle. FIG. 1D shows the control by using the balancer, where the balancer is moved so that an overall center of gravity lies on the vertical axis. The reference position of the existing balancer is changed. FIG. 1E shows the control by moving the seat, where the seat (loading portion) is slid to align the actual center of gravity of the vehicle with the designed center of gravity of the vehicle. That is, the alignment is achieved by displacing the seat in the direction opposite to the direction in which the actual center of gravity of the vehicle is displaced.

As a torque value used for each of the countermeasures of FIGS. 1C to 1E against the displacement of the actual center of gravity of the vehicle, a value is employed that is obtained by weighting a value calculated based on the direct measurement and a value estimated by the disturbance observer corresponding to respective frequency components. The weightings corresponding to the frequency components are determined depending on frequency characteristics of the load meters and the observer.

Note that a mean value of both of the torque values or one of the both may be employed. In the case of employing one of the both, for example, the value obtained by the direct measurement is used if a changing speed of the displacement of the center of gravity is larger than the speed at which the disturbance observer can perform an estimation, whereas the value estimated by the disturbance observer is used if the changing speed of the displacement of the center of gravity is smaller.

On the other hand, for selecting among the countermeasures of FIGS. 1C to 1E against the displacement of the actual center of gravity of the vehicle, each countermeasure using the determined torque value, a torque value corresponding to a frequency is distributed at a ratio depending on the frequency component of the torque value at the frequency. As another alternative, a priority may be given in the order of the balancer moving control, the seat (loading portion 13) moving control, and the main body tilting control, and if control is required to exceed the limit value of the current control, the control of next priority may be used complementarily. As still another alternative, one of the three control methods may be determined as a main control method that is normally used, and the other two may complement the control in the case of failure of the main control. In this case, the one to which a frequency nearer to that of the main control is applied is used as a substitute.

(2) Details of First Embodiment

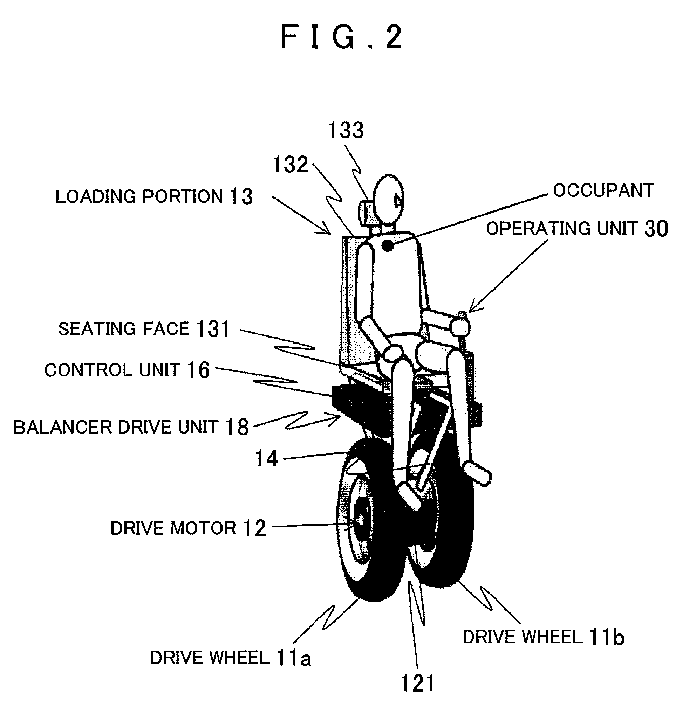

FIG. 2 exemplifies an external configuration of the vehicle according to the first embodiment. As shown in FIG. 2, the vehicle is provided with two coaxially arranged drive wheels 11a and 11b. Both of the drive wheels 11a and 11b are respectively driven by a drive motor 12.

A loading portion 13 (seat) to be loaded with luggage or a rider as a weight body is arranged on the upper side of the drive wheels 11a and 11b (both the drive wheels 11a and 11b will be referred to as drive wheels 11, hereinafter) and the drive motor 12. The loading portion 13 is composed of a seating face 131 on which a driver is seated, a seat back 132, and a headrest 133.

The loading portion 13 is supported by a support member 14 fixed to a drive motor housing 121 that contains the drive motor 12, and structured so as to be movable by an unshown drive mechanism (a seat drive actuator 63 to be described later) relative to the support member 14 or a balancer drive unit 18.

An operating unit 30 is arranged on the left side of the loading portion 13. The operating unit 30 is operated by the driver to command operations such as acceleration, deceleration, turning, rotation, stop, and braking of the inverted pendulum vehicle.

Although the operating unit 30 in the first embodiment is fixed to the seating face 131, the operating unit 30 may be formed with a remote controller through wired or wireless connection. Alternatively, an armrest may be provided to allow the operating unit 30 to be arranged on the upper side thereof.

In addition, whereas the vehicle of the first embodiment is arranged with the operating unit 30, a driving data acquiring unit is provided instead of the operating unit 30 in the case of a vehicle automatically driven according to predetermined driving data. The driving data acquiring unit may be composed of, for example, reading means for reading the driving data from various storage media such as semiconductor memory and/or communication control means for acquiring the driving data from outside through wireless communication.

Note that FIG. 2 shows a case in which the loading portion 13 is loaded with a person. However, the present invention is not necessarily limited to the case of a vehicle driven by a person. There may be a case in which the vehicle loaded only with luggage is driven and stopped by remote control from outside, a case in which the vehicle loaded only with luggage is driven and stopped according to the driving data, and a case in which the vehicle is driven and stopped unloaded.

In the first embodiment, the acceleration, deceleration, and the like are controlled based on operation signals output by operating the operating unit 30. However, as shown, for example, in Patent Document 1, the control may be selectable to the attitude control and driving control of the vehicle in response to the longitudinal tilt angle that is changed by the driver along with the forward tilting moment with respect to the vehicle. In the case that the attitude control and driving control are performed based on the tilt moment applied by the driver, the attitude control according to the first embodiment is not performed.

The seating face 131 of the loading portion 13 is arranged with load meters 51 a to 51e that are not shown and to be described later.

A control unit 16 is arranged between the loading portion 13 and the drive wheels 11. In the first embodiment, the control unit 16 is installed on the lower surface of the seating face 131 of the loading portion 13. However, the control unit 16 may be installed on the support member 14.

The balancer drive unit (balancer and balancer drive actuator) 18 according to the first embodiment is arranged at the lower portion of the control unit 16. The balancer drive unit 18 is arranged in the position between the both drive wheels 11 substantially in the center thereof.

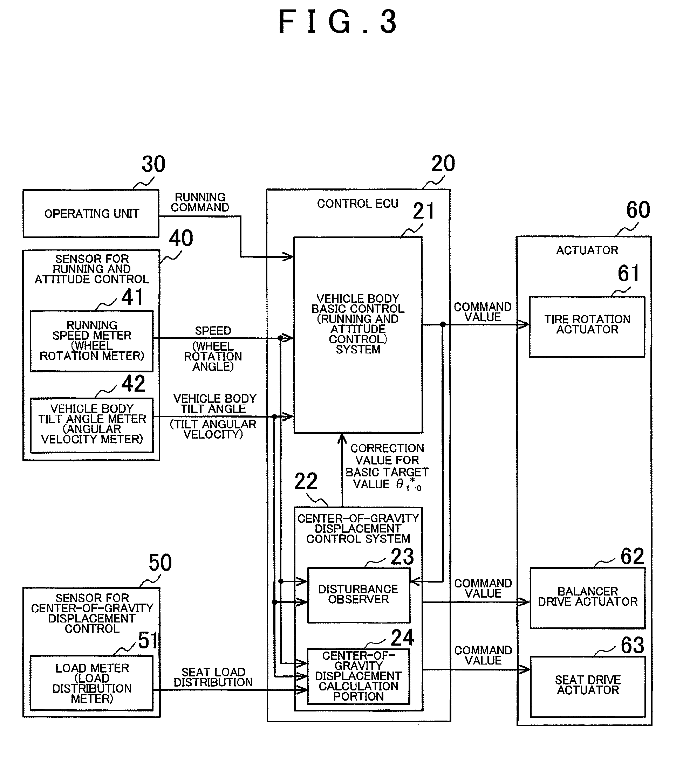

FIG. 3 shows a configuration of the control unit 16. The control unit 16 is provided with a control ECU (electronic control unit) 20 for performing various kinds of control such as the vehicle running and attitude control and the center-of-gravity displacement control in the first embodiment. The operating unit 30, a sensor 40 for running and attitude control, a sensor 50 for center-of-gravity displacement control, an actuator 60, and other devices such as a battery are electrically connected to the control ECU 20.

The battery supplies power to the drive motor 12 and a balancer drive actuator 62. The battery also supplies a low voltage power source for control to the control ECU 20.

The control ECU 20 is composed of a computer system provided with a ROM containing data and various programs such as a running control program, an attitude control program, and a center-of-gravity displacement control program, a RAM for use as a work area, external storage devices, interfaces, and others.

The control ECU 20 is provided with a vehicle body basic control system 21 for performing the running and attitude control, and a center-of-gravity displacement control system 22. The center-of-gravity displacement control system 22 is provided with a disturbance observer 23 and a center-of-gravity displacement calculation portion 24 that calculate the torque values as physical quantities corresponding to the amount of displacement of an actual center of gravity of the vehicle from the reference axis.

Based on the torque values calculated by the disturbance observer 23 and the center-of-gravity displacement calculation portion 24, the center-of-gravity displacement control system 22 calculates and supplies a correction value for a basic target value in vehicle body tilt angle control and command values to the balancer drive actuator 62 and the seat drive actuator 63, respectively, to align the actual center of gravity of the vehicle with the designed center of gravity of the vehicle.

The sensor 40 for running and attitude control is provided with a running speed meter (wheel rotation meter) 41 for detecting a vehicle speed (wheel rotation angle) and a vehicle body tilt angle meter (angular velocity meter) 42 for detecting a vehicle body tilt angle (tilt angular velocity). Detection values of the sensor 40 for running and attitude control are supplied to the vehicle body basic control system 21 and also to the disturbance observer 23 and the center-of-gravity displacement calculation portion 24 of the center-of-gravity displacement control system 22.

The sensor 50 for center-of-gravity displacement control is provided with a plurality of load meters 51 (load distribution meter), and each load data value (seat load distribution) detected by each of the seat load meters 51 is supplied to the center-of-gravity displacement calculation portion 24.

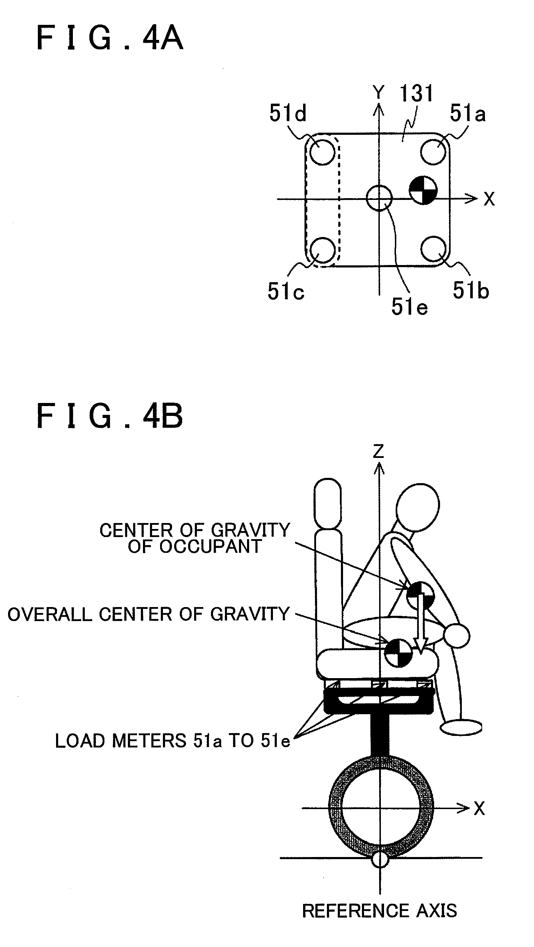

FIG. 4 shows an arrangement of the load meters 51. As shown in FIG. 4, the load meters 51 are arranged at five places of four corners and center of the seating face 131 (seat). Each of the load meters 51 is arranged in the position lower than the seat structure (seating face 131), and configured so as to be capable of measurement even if the rider leans backward. The luggage loaded on the seat can also be measured. Furthermore, the load applied by a person pushing the seat (seating face 131) from outside can be measured. The load meters 51 in the first embodiment can provide a complete measurement under an upright and stationary condition.

Note that because the weight of the vehicle body excluding the drive wheels 11 and the drive motor 12 (hereinafter called "vehicle body weight") and the position of the center of gravity thereof (hereinafter called "vehicle body center-of-gravity position") have fixed values predetermined when designed, they are not quantities to be measured by the load meters 51. The center-of-gravity displacement calculation portion 24 calculates the position of the actual center of gravity and the total weight of the vehicle body and the loaded body from the vehicle body weight, the vehicle body center-of-gravity position, and the detection values of the load meters 51 a to 51e.

Although at least only two of the load meters 51 are required to identify a one-dimensional position (in the longitudinal direction of the vehicle) of the center of gravity, installation of more load meters (five load meters in the first embodiment) realizes a fail-safe function (causing no problem even if one load meter has broken).

Note that sensors that can also measure tensile load may be used as load meters 51. This allows the measurement to be made even if the center of gravity lies outside of the polygon formed by the sensors. In addition, triaxial sensors (tension-compression, and shear forces) may be used to estimate also inertial forces associated with movement of the rider based on two components of the triaxial measurements, in the center-of-gravity displacement calculation portion 24. Moreover, a torsional torque meter may be used to measure a torsional torque applied to the loading portion 13, thus measuring the displacement of the center of gravity.

The actuator 60 is provided with a tire rotation actuator 61 for driving the drive wheels 11 according to the command value supplied from the vehicle body basic control system 21, the balancer drive actuator 62 for moving the balancer according to the command value supplied from the center-of-gravity displacement control system 22, and the seat drive actuator 63 for moving the loading portion 13 forward and backward according to the command value supplied in the same way.

The center-of-gravity displacement control in the vehicle configured as described above as an embodiment will be described next.

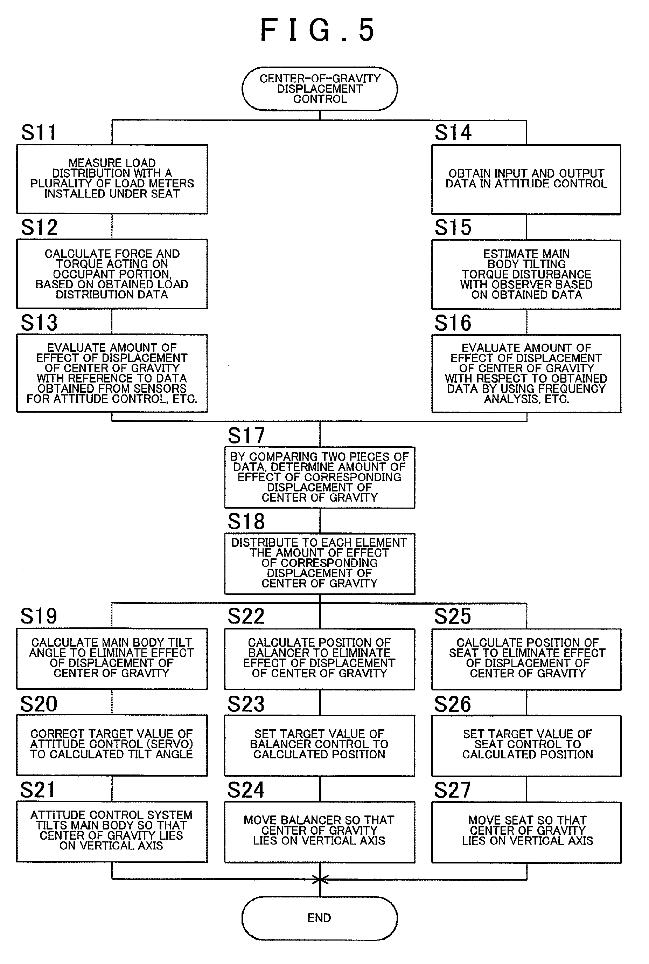

FIG. 5 is a flow chart showing contents of the center-of-gravity displacement control.

In this center-of-gravity displacement control, first the amount of displacement of the actual center of gravity of the vehicle is obtained as a torque value that is a physical quantity (steps 11 to 17), and subsequently, the displaced actual center of gravity of the vehicle is moved so as to lie on the reference axis based on the torque value obtained (steps 18 to 27). The contents of each process will be described below.

Through the steps 11 to 13, the amount of displacement of the actual center of gravity of the vehicle and the torque value generated thereby are calculated from the measured values by the load meters 51 and those for the attitude control, and through the steps 14 to 16, the torque value due to disturbance is estimated using the disturbance observer 23. Note that both of the above processes of the steps are executed in parallel for the calculation and the estimation of the torque values.

First, the load distribution is measured by making a measurement with the five load meters 51a to 51e arranged at the seating face 131, and supplied to the center-of-gravity displacement control system 22 of the control ECU 20 (step 11). The center-of-gravity displacement control system 22 calculates the forces (vertical component and horizontal component) and the torque acting on the loading portion 13 based on the load distribution data (measured values by the respective load meters 51) obtained (step 12).

Denoting the normal force as $F_n^{(k)}$, the transverse force as $F_t^{(k)}$, and the torque as $t_{tn}$, where each acts on the load meter (k), the normal force, the transverse force and the torque acting on the loading portion 13 are obtained by the following formulae 1.

$$F_n = \Sigma F_n^{(k)}, \; F_t = \Sigma F_t^{(k)}, \; t_{tn} = \Sigma F_n^{(k)} X^{(k)} \; \text{(Formulae 1)}$$

Next, the center-of-gravity displacement control system 22 evaluates the amount of effect of the displacement of the center of gravity by using the vehicle body tilt angle $\theta_1$ and a translational acceleration a obtained by the sensor 40 for running and attitude control (step 13). That is, the center-of-gravity displacement control system 22 calculates the weight $m_H$ of the weight body A, the displacement $\lambda_H$ of the center of gravity of the weight body A from the reference axis n, and the height $h_H$ of the center of gravity of the weight body A relative to the mounting position of the load meters 51 as information on the weight body A (rider, luggage, or the like) loaded on the loading portion 13 (seating face 131), based on the following six formulae 2 representing the equilibrium of the forces (normal force and transverse force) and the torque.

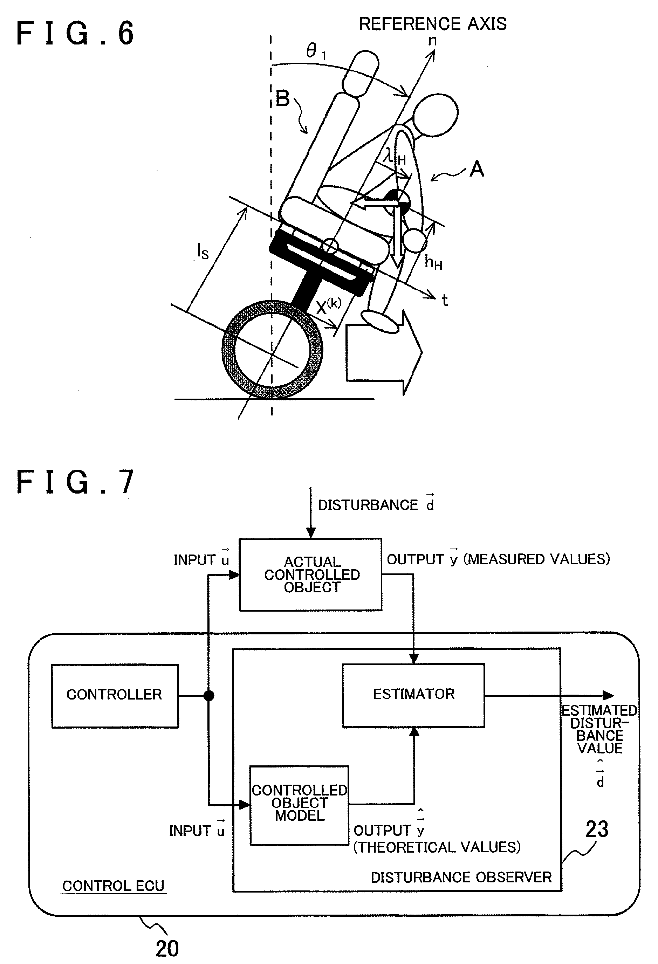

FIG. 6 shows a state of equilibrium of the forces (including inertial forces) and the moment of the weight body A acting on the loading portion 13. The formulae 2 are formulated according to FIG. 6, where the luggage loaded on the loading portion 13 is calculated on the assumption that "rider = uncertain parameter." In the vehicle body tilting motion (tilting motion of loading portion 13), a centrifugal force and an inertial force in the tangential direction are ignored. Note that, in the formulae 1 and 2, $X^{(k)}$ represents the mounting position of the load meter (k) relative to the center point of the vehicle body, $m_s$ represents the mass of the loading portion 13, $\lambda_s$ represents the position of the center of gravity of the loading portion 13 relative to the center point of the vehicle body, $h_s$ represents the height of center of gravity of the loading portion 13, and g represents the gravitational acceleration. Note that the translational acceleration a is calculated from the vehicle speed detected by the running speed meter 41

Formulae2

$$m_c(g\cos\theta_1 + a\sin\theta_1) = -F_n$$

$$m_c(g\sin\theta_1 - a\cos\theta_1) - m_H\ddot{\lambda}_H = F_t$$

$$F_n\lambda_c - F_t h_c - m_H\ddot{\lambda}_H(h_c - h_H) = T_{tn}$$

$$m_c = m_H + m_S, \quad \lambda_c = \frac{m_H\lambda_H + m_S\lambda_S}{m_c}, \quad h_c = \frac{m_H h_H + m_S h_S}{m_c}$$

The position of the center of gravity of the weight body A can be estimated based on the above-shown formulae 2 by using the angle data $\theta_1$ obtained by the vehicle body tilt angle meter 42 used for attitude control, even while the loading portion 13 is tilted. In addition, the position of the center of gravity of the weight body A can be evaluated by referring to the translational acceleration a obtained by the running speed meter 41 (tire rotational angle sensor) used for attitude control, even during acceleration or deceleration. As a result, it is made possible to obtain correct information regarding, for example, the movement of the rider (weight body A) during sudden braking. It is also made possible to correctly distinguish the effect of the displacement of the center of gravity from the effect of the inertial force of the rider, thus enabling to detect the movement of the rider.

Based on the information (weight $m_H$, displacement $\lambda_H$ of the center of gravity, and height $h_H$ of the center of gravity) of the weight body A obtained from the formulae 2, the center-of-gravity displacement control system 22 calculates the torque T applied by the weight A to the loading portion 13, from the following formula 3. In the formula 3, Is is a distance from the axle of the drive wheels 11 to the load meters 51.

Formula3

$$T = m_H g\lambda_H - m_H(h_H + \ell_s)\ddot{\lambda}_H$$

On the other hand, by using the disturbance observer 23, the disturbance, that is, the amount of effect (torque value) of the displacement of the center of gravity of the loading portion 13 is estimated based on the motion of the vehicle body and the results of the attitude control (time history) (steps 14 to 16). FIG. 7 conceptually shows a state of disturbance estimation by the disturbance observer 23. In FIG. 7, the controller corresponds to the vehicle body basic control system 21, and the actual controlled object corresponds to the tire rotation actuator 61 (object of control) and the whole vehicle (object subjected to disturbance).

The disturbance observer 23 is composed of a controlled object model and an estimator. The controlled object model is a theoretical model based on the designed center of gravity of the vehicle and corresponds to the actual controlled object that is a controlled object in reality.

An input u (actually a vector as shown in FIG. 7, however, the vector notation is omitted for notational convenience; the same applies below) from the controller is introduced into both the actual controlled object and the controlled object model. Then, an output y^ (notation differs from that of the drawing, similarly to the vector; the same applies below) is produced as theoretical values from the controlled object model. On the other hand, an output y (measured values such as the tilt angle 0) is produced from the actual controlled object in response to the state in which a disturbance d is applied.

From both the output y^ as theoretical values and the output y as measured values, the estimator calculates an estimated value d^ of disturbance acting on the loading portion 13 according to the following formulae 4. The estimation in the estimator (formulae 4) assumes the effect of the displacement of the actual center of gravity of the vehicle as a part of the disturbance. A minimal order observer is used to reduce calculation time (a full-order observer can be used if robustness is given a higher priority). The estimated speed is determined by a feedback gain L of the disturbance observer 23. Here, because excessively high estimated speed makes the estimation unstable, a certain amount of time is required for the estimation.

Formulae 4

$$\dot{\hat{\vec{d}}} = \vec{z} + \mathbf{L}\,\vec{y}$$

$$\dot{\vec{z}} = -\mathbf{L}\left\{\mathbf{D}\,\vec{z} + (\mathbf{A} + \mathbf{DL})\,\vec{y} + \mathbf{B}\,\vec{u}\right\}$$

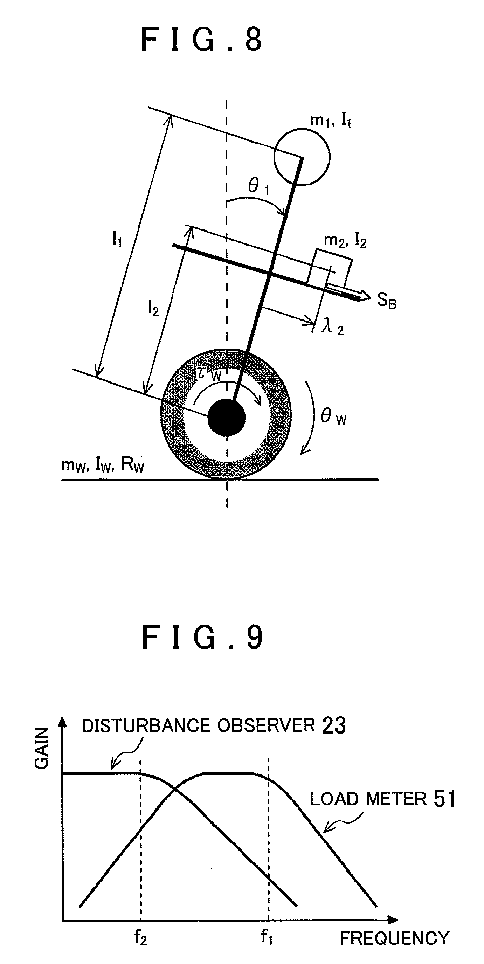

Next, the derivation of the above-shown formulae 4 for calculating the estimated disturbance value d^ will be described. FIG. 8 illustrates a mechanical model taking into account the movement of the actual center of gravity of the vehicle due to the movement of the rider. The symbols shown in FIG. 8 are described as follows.

(a) State Quantities

$\theta_W$: Rotation angle of tire [rad]
$\theta_1$: Tilt angle of main body (relative to vertical axis) [rad]
$\lambda_2$: Position of balancer (relative to center point of vehicle body) [m]

(b) Inputs

$\tau_W$: Drive motor torque (total of two wheels) [Nm]
$S_B$: Balancer drive force [N]

(c) Physical Constant

g: Gravitational acceleration [m/s$^2$]

(d) Parameters

$m_W$: Mass of tire [kg]
$R_W$: Radius of tire [m]
$I_W$: Moment of inertia of tire (about axle) [kgm$^2$]
$D_W$: Viscous damping coefficient for tire rotation [Nms/rad]
$m_1$: Mass of main body (including rider) [kg]
$l_1$: Distance of center of gravity of main body (from axle) [m]
$I_1$: Moment of inertia of main body (about center of gravity) [kgm$^2$]
$D_1$: Viscous damping coefficient for main body rotation [Nms/rad]
$m_2$: Mass of balancer [kg]
$l_2$: Reference distance of center of gravity of balancer (from axle) [m]
$I_2$: Moment of inertia of balancer (about center of gravity) [kgm$^2$]
$D_2$: Viscous damping coefficient for balancer translation [Ns/m]

In the state shown in FIG.8, the standard form of the mechanical model taking into account the movement of the rider is expressed by the linear second-order differential equation of formula 5. The values in the formula 5 are as shown in formulae 6, respectively. The values of $I_{W,a}$ and $I_{12,a}$ in the formulae 6 are as follows.

$$I_{W,a} = I_W + (m_1 + m_2 + m_W)R_W^2$$

$$I_{12,a} = (I_1 + m_1 l_1^2) + (I_2 + m_2 l_{12}^2)$$

Formula 5

$$M_S \ddot{\vec{x}}_S + C_S \dot{\vec{x}}_S + K_S \vec{x}_S = P_u \vec{u} + P_d \vec{d}$$

Formulae6

$$\vec{x}_S = \begin{bmatrix} \theta_W \\ \theta_1 \\ \lambda_2 \end{bmatrix} \qquad \vec{u} = \begin{bmatrix} \tau_W \\ S_B \end{bmatrix}$$

$$\mathbf{M}_S = \begin{bmatrix} I_{W,a} & (m_1\ell_1 + m_2\ell_2)R_W & m_2 R_W \\ (m_1\ell_1 + m_2\ell_2)R_W & I_{12,a} & m_2\ell_2 \\ m_2 R_W & m_2\ell_2 & m_2 \end{bmatrix}$$

$$\mathbf{C}_S = \begin{bmatrix} D_W & 0 & 0 \\ 0 & D_1 & 0 \\ 0 & 0 & D_2 \end{bmatrix} \quad \mathbf{K}_S = \begin{bmatrix} 0 & 0 & 0 \\ 0 & -(m_1\ell_1 + m_2\ell_2)g & -m_2 g \\ 0 & -m_2 g & 0 \end{bmatrix}$$

$$\mathbf{P}_u = \begin{bmatrix} 1 & 0 \\ -1 & 0 \\ 0 & 1 \end{bmatrix}$$

$$外乱 \quad \vec{d} = \begin{bmatrix} m_H g \lambda_H - m_H \ell_H \ddot{\lambda}_H + \tau_e \end{bmatrix}$$

$$進入経路 \quad \mathbf{P}_d = \begin{bmatrix} 0 \\ 1 \\ 0 \end{bmatrix}$$

Disturbance

Penetration path

Note that the formula 5 is expressed in the form of system state equations as shown by formulae 7 so that the disturbance observer 23 can easily process the disturbance due to movement of the weight body A (rider). The values in the formulae 7 are as shown in formulae 8, respectively, where I represents an identity matrix.
Formulae7

$$\dot{\vec{x}} = A\vec{x} + B\vec{u} + D\vec{d} \qquad \vec{y} = C\vec{x}$$

Formulae8

$$\vec{x} = \begin{bmatrix} \vec{x}_S \\ \dot{\vec{x}}_S \end{bmatrix} \qquad A = \begin{bmatrix} 0 & I \\ -M_S^{-1}K_S & -M_S^{-1}C_S \end{bmatrix}$$

$$B = \begin{bmatrix} 0 \\ M_S^{-1}P_u \end{bmatrix} \qquad C = I \qquad D = \begin{bmatrix} 0 \\ M_S^{-1}P_d \end{bmatrix}$$

$$\vec{x}_S = \begin{bmatrix} \theta_W & \theta_1 & \lambda_2 \end{bmatrix}^T \qquad \vec{u} = \begin{bmatrix} \tau_W & S_B \end{bmatrix}^T$$

$$\vec{d} = \begin{bmatrix} m_H g \lambda_H & -m_H \ell_H \ddot{\lambda}_H + \tau_e \end{bmatrix}^T$$

The disturbance observer 23 obtains the input u (torque command value to the tire rotation actuator 61 shown in FIG. 3) and the output y (detection values [speed and vehicle body tilt angle] of the sensor 40 for running and attitude control shown in the same figure) in the attitude control (step 14). Then, the disturbance observer 23 calculates the estimated value d^ of the disturbance acting on the loading portion 13 by solving the above-shown formulae 4 using the estimator (step 15). Note that, although the disturbance observer 23 uses the minimal order observer, the full-order observer can be used for the estimation. The estimated value d^ of the disturbance calculated is represented by formula 9.
Formula9

$$\hat{\vec{d}} = \begin{bmatrix} m_H g \lambda_H & -m_H \ell_H \ddot{\lambda}_H + \tau_e \end{bmatrix}$$

As shown by the formula 9, the estimated disturbance d^ is calculated as a sum of three disturbances. Although each of the disturbances is not obtained individually, being merely a value for mathematical expression, the total value of d^ is calculated because all of the three disturbances contribute to the tilting motion of the vehicle. The first disturbance is the amount of effect of the displacement of the center of gravity due to the movement of the rider, being represented by the first term $(m_H g \lambda_H)$ of the right-hand side of the formula 9. The second disturbance is the effect of the inertial force due to a quick movement of the weight body A (rider), being represented by the second term $(-m_H l_H (\lambda)_H$, where $(\lambda)$ represents $\lambda$ with double dots over it) of the right-hand side. The third disturbance includes other disturbances (such as pushing the vehicle body from outside), being represented by the third term $(\tau_e)$ of the right-hand side.

Because the center-of-gravity displacement control in the first embodiment performs the control against the amount of the disturbance as a whole, the control can be performed without knowing the components of the estimated disturbance d^. However, knowing each of the components enables the following uses.

(a) Each component is compared with respective data of the sensors (such as load meters 51), and if there is a large difference between the component and the sensor data, some one of the sensors is judged to be failed, thus enabling the failure check of the sensors.
(b) An error of the disturbance observer itself (for example, the effect of the inertial force is excessively large compared with the effect of the weight body A [rider], or acting for an excessively long time) can be determined.
(c) Distinction from other control and utilization to other control (for example, steady-state displacement of center of gravity → change in shape of seat or change in position of operation system) are possible.

For the above-described reason, each of the components is extracted and evaluated against the estimated disturbance value d^ calculated (step 16), in the first embodiment. As a general tendency, the displacement of the center of gravity of the weigh body A is steady and in the low-frequency range, the inertial force due to the movement of the center of gravity is nonsteady and in the medium-frequency range (at a speed at which a person can move), and other disturbances are nonsteady and in the high-frequency range.

Then, in the first embodiment, the low-frequency component is extracted by a low-pass filter and assumed to be the effect of the displacement of the center of gravity. The effect of the inertial force is also extracted by obtaining a component in a certain frequency band (approximately 1 Hz to 10 Hz).

Note that the decomposition into the components may be performed by using the information obtained from the load meters on the seat, or the like.

After obtaining, according to the above-described processing, the torque value that has been calculated based on the direct measurement of the load distribution with the load meters 51 and the torque value that has been estimated by the disturbance observer 23, the center-of-gravity displacement control system 22 compares the two data values, and determines the amount of effect of the corresponding displacement of the center of gravity (step 17). That is, the center-of-gravity displacement control system 22 determines the torque to be used for correction, to be described later, of the displacement of the actual center of gravity of the vehicle (steps 18 to 27) based on both of the torque values obtained.

Note that in the description below, the torque value calculated based on the direct measurement of the load distribution will be denoted as Tk, and the torque value estimated by the disturbance observer 23 will be denoted as Tg.

The torque value Tk calculated by using the load meters 51 (steps 11 to 13) and the torque value Tg estimated by the disturbance observer 23 (steps 14 to 16) have upper limit values f1 and f2, respectively, for frequencies within which the evaluation is possible. That is, the torque value Tk by the load meters 51 has the upper limit f1 determined by hardware limitations such as natural frequency and response performance, and the torque value Tg by the disturbance observer 23 has the upper limit f2 for stability (robustness) determined from the estimated speed (pole).

Therefore, in the first embodiment, the weightings based on the respective frequency components for the frequency components of both of the torques Tk and Tg are defined based on the upper limits f1 and f2 as follows. FIG. 9 shows the weightings for respective frequency components applied to both of the torque values calculated.

(a) For the torque value Tg by the disturbance observer 23, the weighting is reduced as the frequency increases beyond the upper limit f2.
(b) For the torque value Tk by the load meters 51, the weighting is reduced as the frequency increases beyond the upper limit f1.
(c) In the range in which the reliability of the disturbance observer 23 is high (in the frequency range at and below the upper limit f2), the weighting for the torque value Tg by the disturbance observer 23 is kept large, and the weighting for the torque value Tk by load meters 51 is gradually reduced.
(d) At a frequency of f1 or more at which only the torque value Tk by the load meters 51 is used, the weighting has a value of 1 or less, and at a frequency of less than f1, the sum of the both weightings has a value of 1. For example, at f2, the weighting of Tk = 0.4, and the weighting of Tg = 0.6.

Note that, in the first embodiment, one of the both torque values Tk and Tg is used as a failure determination indicator for the other value. That is, the difference between the both values is evaluated for each frequency component, and if the difference is large, one that is judged, through detailed examination, to have a higher possibility of error is regarded as failed. If one is determined as failed, the other torque value is used with a weighting of 1.

After the value (denoted as Tf) to be employed based on the torque values Tk and Tg is determined for each frequency component as a result of the above-described step (step 17), the center-of-gravity displacement control system 22 distributes the amount of effect Tf of the corresponding displacement of the center of gravity, to respective elements (center-of-gravity displacement correction mechanisms [systems] S1, S2, and S3) (step 18). Here, the center-of-gravity displacement correction mechanisms S1, S2, and S3 correspond to the correction of main body reference angle (C), the center-of-gravity correction by using an added weight (balancer) (D), and the center-of-gravity correction by deformation of vehicle body (seat movement) (E), respectively, that are outlined in FIGS. 1C, 1D and 1E.

Each of the correction mechanisms (systems) S1, S2, and S3 has a frequency range suitable for using the mechanism with respect to each frequency component. For example, the correction mechanism S2 by movement of balancer has an upper limit f3, and the correction mechanism S3 by movement of seat has an upper limit f4. Therefore, the center-of-gravity displacement control system 22 distributes the torque value Tf determined in the step 17 as torque values to be used by the respective correction mechanisms (systems) depending on the frequency components of the torque value Tf.

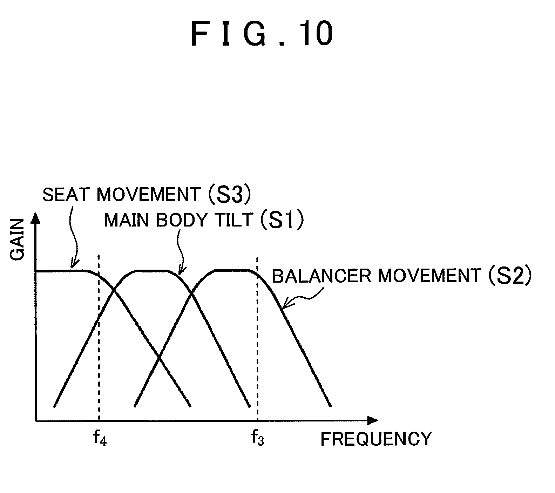

FIG. 10 shows the weightings for respective frequencies used for distributing the torque value Tf to the center-of-gravity displacement correction mechanisms (systems) S1, S2, and S3. In the first embodiment, as shown in FIG. 10, the weightings used for distributing the torque Tf in accordance with the characteristics of the respective center-of-gravity displacement correction mechanisms (systems) are determined as follows.

    (1) In the low-frequency range, the weighting for the correction mechanism S3 by movement of seat is determined to be large, and the weighting for the correction mechanism S 1 by main body tilting is determined to be reduced as the frequency becomes lower.

    (2) In the high-frequency range, the weighting for the correction mechanism S2 by movement of balancer is determined to be large, and the weighting for the correction mechanism S1 by main body tilting is determined to be reduced as the frequency becomes higher. In addition, in the high-frequency range at and beyond the upper limit f3 of the correction mechanism S2 by movement of balancer, the weighting is determined to be reduced as the frequency becomes higher.

    (3) In the medium-frequency range, as a complement for S3 and S2, the weighting for the correction system S1 by main body tilting is determined to be large, whereas the weighting for the S2 is determined to be reduced as the frequency becomes lower from the high-frequency side, and also the weighting for the S3 is determined to be reduced as the frequency becomes higher from the low-frequency side.

    (4) The weighting is determined to be 1 or less at a frequency of the upper limit f3 or more by movement of balancer, and at a frequency of less than f3, the sum of the weightings is determined to be 1.

Note that, although the present invention has been described above in the case where the torque Tf is distributed according to the weightings for the respective correction mechanisms (systems) S1 to S3 (FIG. 10), the correction mechanism S2 by movement of balancer may be mainly used, and if a performance beyond the capability limit thereof is required, the correction mechanism S3 by movement of seat may be used as a substitute or supplement. Then, if a performance even exceeding the limit of the correction mechanism S3 by movement of seat is required, the correction mechanism S1 by main body tilting may be used as another substitute or supplement. The limits of the correction mechanisms (systems) S1 to S3 are respectively described as follows.

    (a) The correction mechanism S2 by movement of balancer has small values of the limit (by weight and maximum travel).

    (b) The correction mechanism S3 by movement of seat (loading portion 13) has a medium value of the limit (by maximum travel).

    (c) The correction mechanism S 1 by main body tilting has a large limit value. However, a limitation by frequency exists.

Alternatively, the entire torque value of the corresponding frequency may be distributed to each of the correction mechanisms; that is, the torque value in the low-frequency range may be distributed to the correction mechanism S3 by movement of seat, the torque value in the high-frequency range may be distributed to the correction mechanism S2 by movement of balancer, and the torque value in the medium-frequency range may be distributed to the correction mechanism S1 by main body tilting.

Still alternatively, any of the three correction mechanisms (systems) S1 to S3 may be used as a substitute for fail-safe purposes. That is, one of the three control mechanisms, for example the S2, may be determined as a main correction mechanism that is normally used, and the remaining two mechanisms are used as complements in the case of failure of the main control mechanism. In this case, as the substitute, the mechanism whose applicable frequency is nearer to that of the main control mechanism is chosen from the two alternatives.

After determining the torque value Tf (= $\tau_{1,e}$) to be distributed to each of the correction mechanisms (systems) S1 to S3, the center-of-gravity displacement control system 22 uses each of the correction mechanisms (systems) to correct the displacement of the center of gravity (steps 19 to 21, steps 22 to 24, and steps 25 to 27).

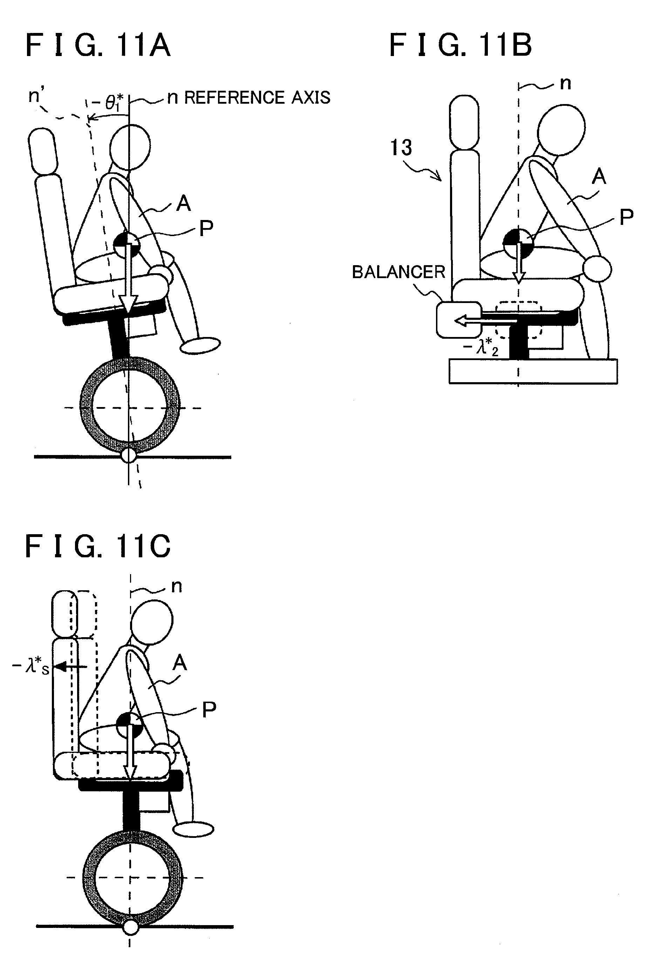

FIG. 11 shows methods for correcting the displacement of the center of gravity by the respective correction mechanisms (systems) S1 to S3. FIG. 11 shows examples of the cases in which the entire torque value Tf determined is distributed to each one of the respective correction mechanisms (systems), each example illustrating the case in which a single correction mechanism (system) moves the actual center of gravity P of the vehicle so as to lie on the reference axis n. Note that, in the case in which the torque value Tf is distributed respectively to the correction mechanisms (systems) S 1 to S3, the actual center of gravity P of the vehicle is moved so as to lie on the reference axis by overall operation of all of the correction mechanisms (systems) with the distributed torques.

In the case of the correction mechanism S 1 by main body tilting, the center-of-gravity displacement control system 22 calculates the main body tilt angle (correction value $\theta_1^*{}_{,1}$ for basic target value $\theta_1^*{}_{,0}$) to eliminate the effect of displacement of the center of gravity according to the following formula 10 as shown in FIG. 11A, and then supplies the calculation result to the vehicle body basic control system 21 (step 19). Here, the basic target value $\theta_1^*{}_{,0}$ is a target tilt angle that is set on the assumption that the overall center of gravity lies on the vehicle body axis, and the correction value $\theta_1^*{}_{,1}$ for the basic target value is a value for correcting the target tilt angle by taking the effect of the displacement of the center of gravity into account.

$$\theta_1^*{}_{,1} = -\sin^{-1} (\tau_{1,e}/m_1 g) \text{ (Formula 10)}$$

By using the correction value $\theta_1^*{}_{,1}$ supplied, the vehicle body basic control system 21 corrects the target value of the attitude control (servo) from the basic target value $\theta_1^*{}_{,0}$ to a corrected target value $\theta_1^*$ according to the following formula 11 (step 20). In the formula 11, $m_1$ is a total mass of the main body and the rider.

$$\theta_1^* = \theta_1^*{}_{,0} + \theta_1^*{}_{,1} = \theta_1^*{}_{,0} -\sin^{-1} (\tau_{1,e}/m_1 g) \text{ (Formula 11)}$$

Next, by using the corrected target value $\theta_1^*$, the vehicle body basic control system 21 calculates the drive torque (total of two wheels) $\tau_W$ of the drive motor 12 according to formula 12, and then by supplying the drive torque $\tau_W$ as a command value to the tire rotation actuator 61, tilts the main body (loading portion 13) so that the actual center of gravity of the vehicle moves so as to lie on the reference axis n (vertical line in the figure) (step 21).

$$\tau_W = -K (\theta_1 - \theta_1^*) - \ldots \text{ (Formula 12)}$$

In the case that the displacement of the actual center of gravity of the vehicle is corrected by this correction system of main body tilting, the existing attitude control system can be used without modification to respond to the displacement of the center of gravity.

Next, the correction by movement of balancer (steps 22 to 24) will be described. The correction mechanism S2 by movement of balancer controls the position of the mass (balancer) added to the vehicle body so that the overall center of gravity lies on the reference axis n, as shown in FIG. 11B. That is, the center-of-gravity displacement control system 22 calculates the position $\lambda_2^*$ of the balancer to eliminate the effect of displacement of the center of gravity according to formula 13 (step 22). Note that $m_2$ is a mass of the balancer.

$$\lambda_2^* = - (\tau_{1,e}/m_2 g) \text{ (Formula 13)}$$

Next, the center-of-gravity displacement control system 22 sets the target value of the balancer control to the calculated position (step 23), and then drives the balancer so that the center of gravity moves so as to lie on the reference line (vertical line in the figure) (step 24). That is, the center-of-gravity displacement control system 22 calculates a balancer drive force $S_B$ according to the following formula 14 in which the current balancer position is denoted as $\lambda$, and then supplies the balancer drive force $S_B$ as a command value to the balancer drive actuator 62. Hereby, the balancer is moved to the determined position to move the actual center of gravity of the vehicle so as to lie on the reference axis n (vertical line in the figure).

$$S_B = -K\,(\lambda_2 - \lambda^*_2) - \ldots \text{ (Formula 14)}$$

In the case that the displacement of the actual center of gravity of the vehicle is corrected by this balancer movement, it is also possible to respond to the high-frequency component of the displacement of the center of gravity. In addition, no excessive inertial force is applied to the rider because the seat need not be moved. In the case that the basic attitude control system uses the movement of the balancer, the position $\lambda^*_2$ of the balancer is given as the correction value. Note that the effect of reaction force due to acceleration or deceleration of the balancer can be eliminated by arranging the balancer at the same height as that of the axle.

Next, the correction by deformation of vehicle body (seat movement) (steps 25 to 27) will be described. The correction mechanism S3 by movement of seat translates the loading portion 13 forward and backward so that the overall center of gravity lies on the reference axis n, as shown in FIG. 11C.

That is, the center-of-gravity displacement control system 22 calculates the position $\lambda^*_3$ of the seat (loading portion 13) to eliminate the effect of displacement of the center of gravity according to formula 15 (step 25). Note that $m_c$ is a total mass of the loading portion 13 and the weight body A (for example, the rider). The mass of the weight body A is obtained from the measured values by the load meters 51 in the first embodiment. However, if load meters are not used, the value of the model weight that has been assumed in the case of determination of the designed center of gravity of the vehicle is used.

$$\lambda^*_3 = -\,(\tau_{1,e}/m_c g) \text{ (Formula 15)}$$

Next, the center-of-gravity displacement control system 22 sets the target value of the seat control to the calculated seat position $\lambda^*_3$ (step 26), and then moves the seat so that the center of gravity moves so as to lie on the reference line (vertical line in the figure) (step 27). That is, the center-of-gravity displacement control system 22 calculates a seat (loading portion 13) drive force $S_S$ according to the following formula 16 in which the seat position before movement relative to the center point of the vehicle body is denoted as $\lambda_3$, and then supplies the seat drive force $S_S$ as a command value to the seat drive actuator 63. Hereby, the loading portion 13 is moved to the determined position to move the actual center of gravity of the vehicle so as to lie on the reference axis n (vertical line in the figure).

$$S_S = -K\,(\lambda_3 - \lambda^*_3) - \ldots \text{(Formula 16)}$$

In the case that the displacement of the actual center of gravity of the vehicle is corrected by this seat movement, it is possible to respond to the low-frequency component of the displacement of the center of gravity because the seat (loading portion 13) cannot be moved quickly. Although the amount of correction has a quantitative limit determined by the maximum travel, the value of the limit is larger than that of the correction by balancer movement. Note that it is possible to accelerate the wheels forward at the same time when the seat is accelerated backward so that the rider does not feel an inertial force. In the case that the basic attitude control system uses the movable seat, the seat position $\lambda^*_3$ is given as the correction value.

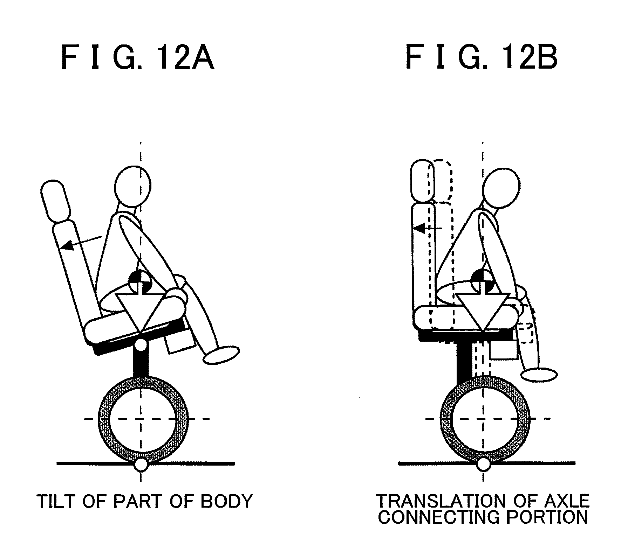

An embodiment of the vehicle according to the present invention has been described above. However, the present invention is not limited to the embodiment described above, but can be subjected to various modifications within the scope of what is described in the claims. For example, in the embodiment described above, the case has been described in which the loading portion 13 is translated as a method of deforming the vehicle body for correcting the displacement of the actual center of gravity of the vehicle. However, the vehicle body may be deformed by any other mechanism. For example, a part of the vehicle may be tilted to correct the displacement of the actual center of gravity of the vehicle, as shown in FIG. 12A. Alternatively, the portion on the upper side of the connection with the axle may be translated, as shown in FIG. 12B.

In addition, in the embodiment described above, the vehicle has been described as having two drive wheels arranged on one axle. However, the present invention can be applied to a vehicle driven with one drive wheel keeping the balance in the fore-and-aft and right-and-left directions.

Moreover, in the embodiment described above, the case has been described in which the correction is applied to the displacement of the actual center of gravity of the vehicle in the fore-and-aft direction with respect to the direction of travel of the vehicle. However, similar control can also be applied to the case in which the actual center of gravity of the vehicle is displaced in the right-and-left direction. Although the center-of-gravity displacement control in the right-and-left direction can be applied to the two-wheeled vehicle, it is particularly effective when applied to the one-wheeled vehicle mentioned above.

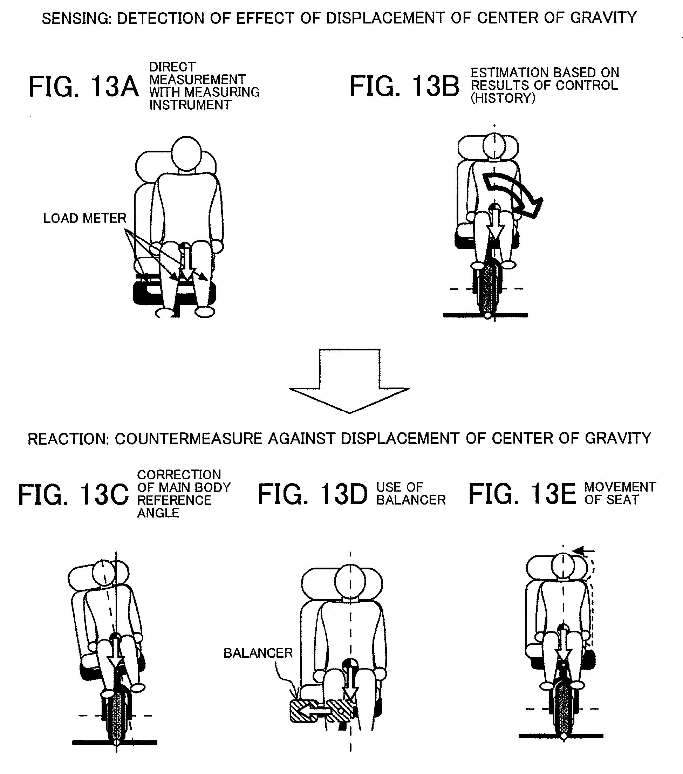

FIG. 13 shows cases in each the amount of displacement (torque value) in the right-and-left direction (lateral direction) is calculated, and also shows the mechanisms (systems) for correcting the displacement in response to the calculated torque values, corresponding to FIGS. 1 and 11.

FIG. 13A, corresponding to FIG. 1A, shows the case in which the position of the center of gravity and the weight of the rider portion are calculated from the load distribution measured by the load meters 51a to 51e arranged at the seating face 131. Although FIG. 13 describes the case of the displacement in the right-and-left direction, a case is also obviously included in which both displacements in the fore-and-aft and right-and-left directions are calculated and corrected.

FIG. 13B, corresponding to FIG. 1B, shows the case in which the amount of displacement is estimated based on the result of control (history) is estimated. The disturbance observer 23, for example, estimates the displacement of the center of gravity based on the history of change in attitude of the vehicle body and of torque input. That is, if the vehicle body is going to tilt to the right or left (a tilting torque is applied) even though the tilt angle of the reference axis coincides with the reference angle relative to the reference axis (the control assumes no tilt), the actual center of gravity of the vehicle is considered to be displaced to the right or left from the designed center of gravity of the vehicle. Therefore, the amount of displacement is estimated, for example, as a disturbance torque by the disturbance observer. Note that this case is applied to the one-wheeled vehicle because the vehicle needs to be actually tilted to the right and left.

The torque values calculated as shown in FIGS. 13A and 13B are determined based on the weightings depending on the frequency in the same manner as the step 17 described above. Also, the torque value determined depending on the frequency is distributed depending of the frequency characteristics of the respective displacement correction mechanisms (systems) in the same manner as the step 18 described above.

FIGS. 13C to 13E show the displacement correction mechanisms (systems) corresponding to FIGS. 1C to 1E, and FIGS. 11A to 11C, respectively. That is, as shown in FIG. 13C, the main body reference angle in the right-and-left direction is corrected corresponding to the distributed torque value. In addition, as shown in FIG. 13D, the balancer is moved in the right-and-left direction corresponding to the distributed torque value. Furthermore, as shown in FIG. 13E, the seat is moved in the right-and-left direction corresponding to the distributed torque value.

The calculation of the amount of displacement and corrective control of the amount of displacement of the actual center of gravity of the vehicle described above can also be used as follows.

(1) Settings when Getting on and off Vehicle

Specifically, the completion of getting on or off the vehicle can be estimated from history of the displacement of the center of gravity. In addition, as a support for getting on and off the vehicle, the center of gravity can be intentionally displaced when a start of getting on or off is detected, thus preventing the vehicle from falling due to an extreme displacement of the center of gravity.

(2) Input and Storage of Information - Direct Input From Operation Panel (Operating Unit 30, etc.) and Use of Memory

Specifically, by entering the information on distinction of the loaded weight body A among person, luggage, nothing, etc. from an input device such as the operation panel, the qualitative tendency of the controlled object, such as frequently moving, not moving, light-weighted, or absent, can be known. In addition, the body weight and body shape of a person can be entered as values for reference for failure check regarding the weight and the amount of displacement of the center of gravity, and as initial values of estimation.

(3) Storage of Past Operation History

Specifically, the parameters for riders and the operation history can be stored as values for reference for failure check and as initial values of estimation.

(4) Center-of-Gravity Movement Driving System

Specifically, in the case of a system in which the rider operates the vehicle by displacing the rider's own center of gravity (a system that performs attitude control and running control by tilt moment applied by the driver), the amount of displacement of the actual center of gravity of the vehicle that is calculated in the embodiment described above may be used as an input to the operation system of the vehicle. In that case, the low-frequency component can be judged to be an input from the rider, and the high-frequency component can be subjected to suppression control as a disturbance. Hereby, the intention (movement) of the rider can be reflected more correctly in the operation. In this case, the output may be produced (power-assisted) by multiplying the torque due to the actual displacement of the center of gravity by a gain, or a dead zone may be provided in the vicinity of the zero point.

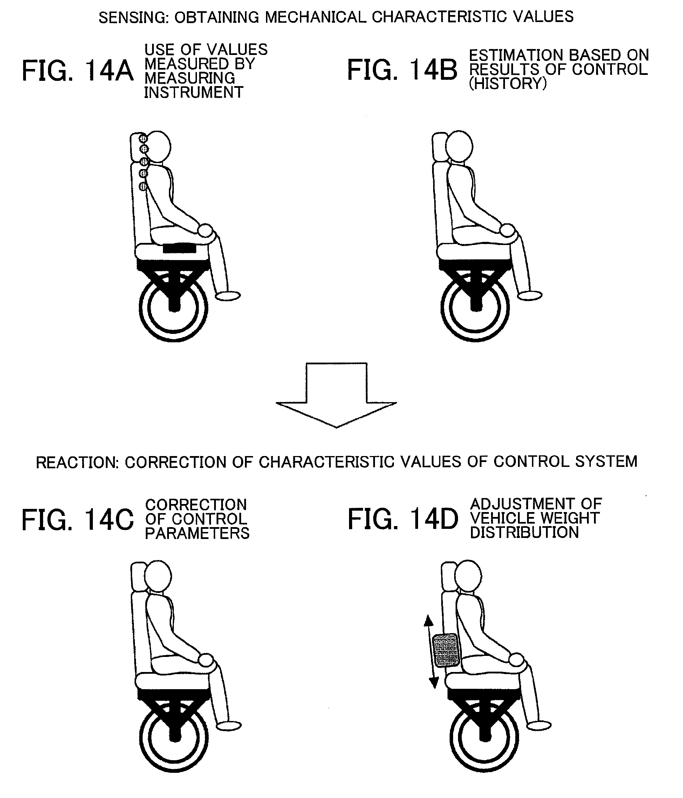

Next, a preferred embodiment of a vehicle, a characteristic value estimating device, and a loaded article determination device according to a second embodiment will be described in detail below with reference to FIGS. 14 to 24. In the second embodiment described below, the characteristic value estimating device and the loaded article determination device will be explained taking an example of the vehicle controlling the attitude of itself that enables to achieve the attitude control suitable for the state of the weight body loaded on the vehicle, by correcting the control parameters through estimation of the actual mechanical characteristic values and through use of the estimated the actual mechanical characteristic values.

(1) Outline of Second Embodiment

FIG. 14 shows an outline of control system characteristic value correction processing according to the second embodiment that corrects the control system characteristic values to optimal values in accordance with the actual weight body. Note that the portion of the vehicle that is tilted for balancing is referred to as "controlled target object" in this specification. Note also that the "loaded article" corresponds to a person, luggage, an animal, etc., referring to everything that gets on the vehicle from outside and meaning a "weight body." The portion of the "controlled target object" excluding the "loaded article" is referred to as the "vehicle body."

In the second embodiment, as shown in FIGS. 14A and 14B, the actual mechanical characteristic values of the entire controlled target object including the loaded article on the current vehicle are obtained by direct measurement with measuring instruments and/or estimation based on results of control (history) (sensing). Then, as the reaction shown in FIGS. 14C and 14D, the control system characteristic values in the attitude control system are corrected based on the estimated mechanical characteristic values and used for control.

FIG. 14A shows a method for directly measuring the mechanical characteristic values of the loaded article with measuring instruments. That is, a weighing scale (load meter) and a sitting height meter are arranged under the loading portion (seat) and on the seat back, respectively, and the weight and the sitting height of the loaded article are measured. The mechanical characteristic values of the loaded article are estimated, and then the mechanical characteristic values of the entire controlled target object are calculated (the characteristic values of the vehicle body are already known).

FIG 14B shows a case in which the mechanical characteristic values are estimated by, for example, a disturbance observer, based on the history of attitude change and torque input of the controlled target object. That is, if an attitude change, for example a tilting up, of the vehicle body (controlled target object) is too late or too early for a given torque (torque input), it should be considered that the weight or the position of center of gravity of the loaded article has a larger or higher value, or a smaller or lower value, respectively, than an assumed value. The effect as described above is estimated by the disturbance observer to estimate the mechanical characteristic values of the entire controlled target object.

By using the actual mechanical characteristic values of the controlled target object estimated as described above, the characteristic values of the actual attitude control system are corrected. FIG. 14C shows a case in which the control parameters are corrected. The control system characteristic values such as a feedback gain in the attitude control system are corrected based on the estimated mechanical characteristic values. In this case, there are two methods: one is a method in which optimal values of the control parameters for the estimated mechanical characteristic values are calculated, and the other is a method in which the values of the control parameters are corrected so as to change the control system characteristic values as little as possible. As the second embodiment, either of the two methods may be used, or both of the two may be used. In the case of using the both, for example, the control parameters are calculated using a characteristics invariance parameter calculation for an initial predetermined time period after a change in the mechanical characteristic values has been detected, and calculated using a characteristics optimization parameter calculation after the predetermined time period has passed.

FIG. 14D shows an adjustment of the control system characteristic values with a weight. By moving the weight arranged on the back face of the vehicle body so as to be movable in the up-and-down direction, the control system characteristic values are brought close to the reference values. For example, when the rider has lifted the luggage from the foot level onto the seat or raised an arm, the position of the weight is brought down to adjust the position of the center of gravity of the controlled target object and also to reduce the moment of inertia, thus bringing the control system characteristic values close to designed values.

(2) Details of Second Embodiment

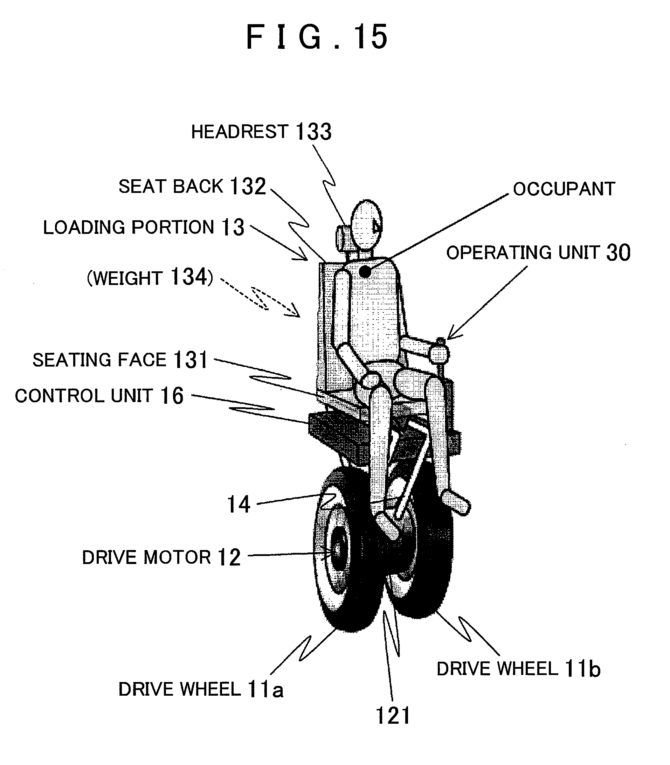

FIG. 15 is an example showing an external configuration of the vehicle according to the second embodiment. As shown in FIG. 15, the vehicle is provided with two coaxially arranged drive wheels 11a and 11b. Both of the drive wheels 11a and 11b are respectively driven by a drive motor 12.

A loading portion 13 (seat) to be loaded with luggage or the rider serving as the weight body is arranged on the upper side of the drive wheels 11a and 11b (both the drive wheels 11a and 11b will be referred to as drive wheels 11, hereinafter) and the drive motor 12. The loading portion 13 is composed of a seating face 131 on which a driver is seated, a seat back 132, and a headrest 133.

The loading portion 13 is supported by a support member 14 fixed to a drive motor housing 121 that contains the drive motor 12.

An operating unit 30 is arranged on the left side of the loading portion 13. The operating unit 30 is operated by the driver to command operations such as acceleration, deceleration, turning, rotation, stop, and braking of the vehicle.

Although the operating unit 30 in the second embodiment is fixed to the seating face 131, the operating unit 30 may be formed with a remote controller through wired or wireless connection. Alternatively, an armrest may be provided to allow the operating unit 30 to be arranged on the upper side thereof.

In addition, whereas the vehicle of the second embodiment is arranged with the operating unit 30, a driving data acquiring unit is provided instead of the operating unit 30 in the case of a vehicle automatically driven according to predetermined driving data. The driving data acquiring unit may be composed of, for example, reading means for reading the driving data from various storage media such as semiconductor memory and/or communication control means that acquires the driving data from outside through wireless communication.

Note that FIG. 15 shows a case in which the loading portion 13 is loaded with a person. However, the present invention is not necessarily limited to the case of a vehicle driven by a person. There may be a case in which the vehicle loaded only with luggage is driven and stopped by remote control from outside, a case in which the vehicle loaded only with luggage is driven and stopped according to the driving data, and a case in which the vehicle is driven and stopped unloaded.

In the second embodiment, the acceleration, deceleration, and the like are controlled based on operation signals output by operating the operating unit 30. However, as shown, for example, in Patent Document 1, the control may be selectable to the attitude control and driving control of the vehicle in response to the longitudinal tilt angle that is changed by the driver along with the forward tilting moment with respect to the vehicle. In the case that the attitude control and driving control are performed based on the tilt moment applied by the driver, the attitude control according to the second embodiment is not performed.

The lower side of the loading portion 13 (the back side of the seating face 131) is arranged with a load meter 51 that is not shown and to be described later. In addition, the back face of the loading portion (the rear surface or inside of the seat back) is arranged with a weight 134. The weight 134 is configured so as to be movable in the up-and-down direction by a weight drive actuator 62 to be described later.

A control unit 16 is arranged between the loading portion 13 and the drive wheels 11. In the second embodiment, the control unit 16 is installed on the lower surface of the seating face 131 of the loading portion 13. However, the control unit 16 may be installed on the support member 14.

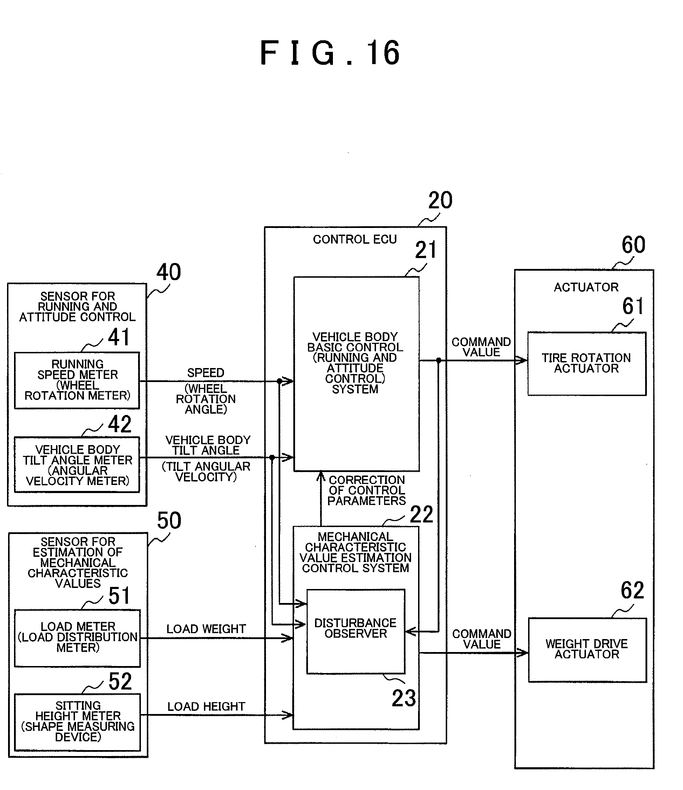

FIG. 16 shows a configuration of the control unit 16. The control unit 16 is provided with a control ECU (electronic control unit) 20 that performs various kinds of control such as the vehicle running and attitude control and the control system characteristic value correction control in the second embodiment. The operating unit 30, a sensor 40 for running and attitude control, a sensor 50 for estimation of mechanical characteristic values, an actuator 60, and other devices such as a battery are electrically connected to the control ECU 20.

The battery supplies power to the drive motor 12, the weight drive actuator 62, the control ECU 20, and others.

The control ECU 20 is composed of a computer system provided with a ROM containing data and various programs such as the running control program, the attitude control program, and a control system characteristic value correction processing program, a RAM for use as a work area, external storage devices, interfaces, and others.

The control ECU 20 is provided with the vehicle body basic control system 21 that performs the running and attitude control, and a mechanical characteristic value estimation control system 22. The mechanical characteristic value estimation control system 22 estimates the actual mechanical characteristic values of the controlled target object in the attitude control system based on the measured values of the sensor 50 for estimation of mechanical characteristic values and also based on the results of control (history) by using the disturbance observer 23, thus functioning as estimation means. In addition, in order to correct the control system characteristic values of the attitude control system based on the actual mechanical characteristic values estimated, the mechanical characteristic value estimation control system 22 supplies corrected values of the control parameters to the vehicle body basic control system 21, and also supplies a command value indicating the amount of movement of the weight 134 (FIG. 14) to the weight drive actuator 62.

The sensor 40 for running and attitude control is provided with a running speed meter (wheel rotation meter) 41 for detecting a vehicle speed (wheel rotation angle) and a vehicle body tilt angle meter (angular velocity meter) 42 for detecting a vehicle body tilt angle (tilt angular velocity). Detection values of the sensor 40 for running and attitude control are supplied to the vehicle body basic control system 21 and also to the mechanical characteristic value estimation control system 22.

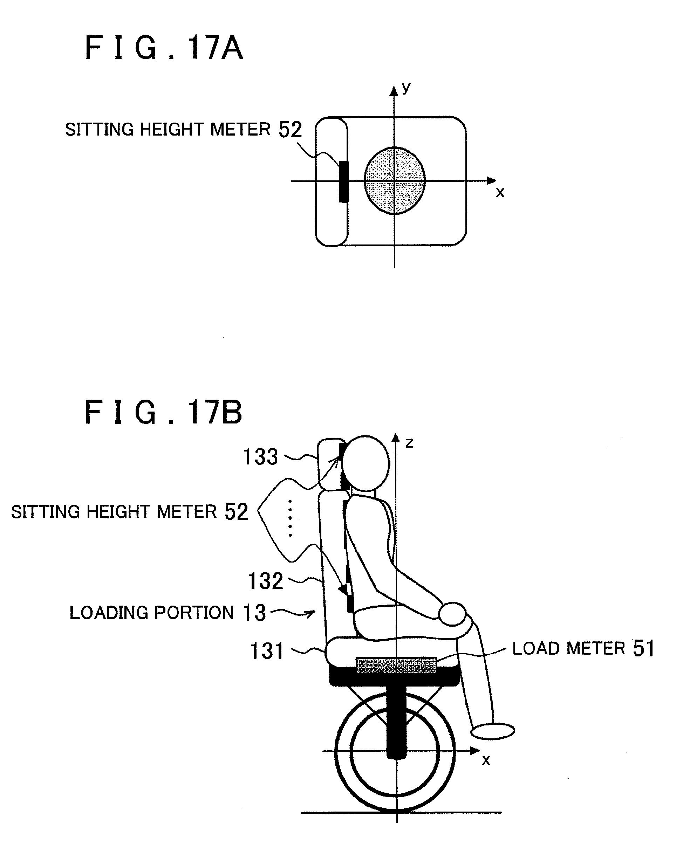

The sensor 50 for estimation of mechanical characteristic values is provided with the load meter 51 (or a load distribution meter) and a sitting height meter (or a shape measuring device) 52. FIG. 17 shows an arrangement of the load meter 51 and the sitting height meter 52. As shown in FIG. 17B, the load meter 51 is arranged on the lower side of the loading portion 13, specifically, on the lower surface of the seating face 131, and measures a mass of the loaded article to be supplied to the mechanical characteristic value estimation control system 22. Because of being arranged on the lower side of the loading portion 13, the load meter 51 is configured so as to be capable of measuring not only a load of the loaded article arranged on the loading portion, but also a load of the luggage hung on the seat back 132 or the headrest 133 as well as a load of every loaded article arranged at any other location. Note that because the weight of the vehicle body (hereinafter called "vehicle body weight") and the position of the center of gravity thereof (hereinafter called "vehicle body center-of-gravity position") have fixed values predetermined when designed, they are not quantities to be measured by the load meter 51.

Although the load meter 51 of the second embodiment measures the mass of the rider using one single-component load meter while the vehicle is running upright at a low speed, a combination of a main body tilt angle sensor and a translational acceleration sensor used for the attitude control, or a three-component load meter may be used. Hereby, the load can also be measured while the vehicle is tilted or accelerated. In addition, a plurality of the load meters may be arranged to measure a load distribution for estimating the size of the rider.

As shown in FIGS. 17A and 17B, the seat back 132 is provided with the sitting height meter 52 for measuring the sitting height (height) of the loaded article such as the rider. The sitting height meter 52 has a plurality of fixed optical sensors arranged in the direction of z-axis (in the direction of height) to discretely measure the sitting height of the rider and supply the measured values to the mechanical characteristic value estimation control system 22 (FIG. 16). Note that the sitting height meter 52 may have moving (scanning) optical sensors to perform scanning in the direction of z-axis, whereby the measurement can be made with a high accuracy. Alternatively, the fixed optical sensors may be distributed on a plane, or the scanning optical sensors may perform a planar scan to identify the size and shape of the rider for distinguishing the loaded article (person, luggage, or other).

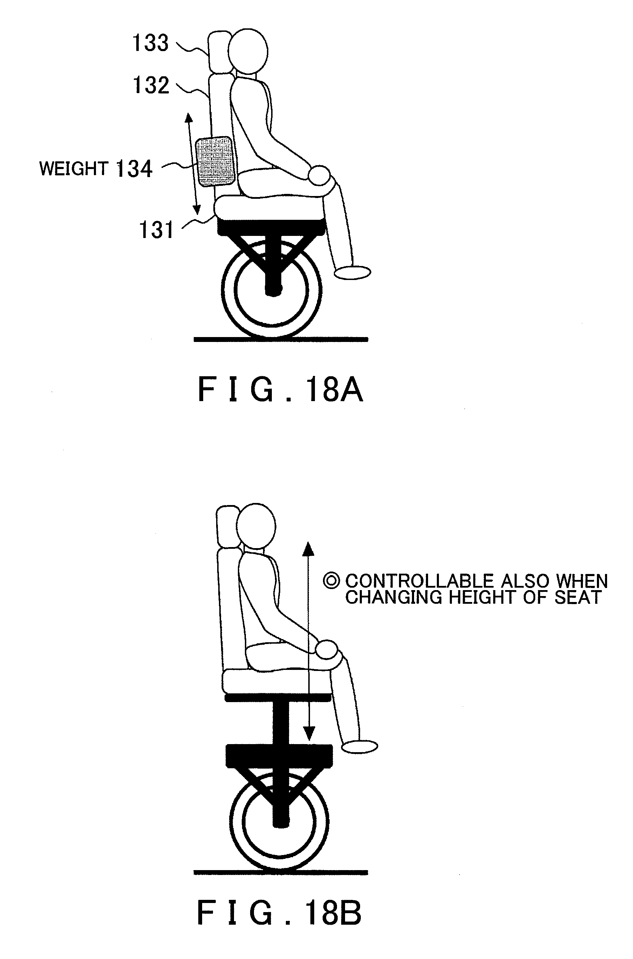

FIG. 18 shows the weight 134 arranged on the seat back 132. As shown in FIG. 18A, the weight 134 is arranged on the seat back 132, and configured so as to be movable in the up-and-down direction. The movement in the up-and-down direction is achieved by a variety of methods such as moving with a ball screw or moving on a rail by using a linear motor. Moving the weight 134 in the up-and-down direction serves as vehicle body deforming means for changing the position of the center of gravity or the moment of inertia of the vehicle body. Note that the position of the center of gravity or the moment of inertia of the vehicle body may be changed by changing the height of the loading portion 13 (controlled target object), as shown in FIG. 18B. The position of the center of gravity or the moment of inertia of the vehicle body may also be changed by using weight distribution changing means for changing the weight distribution of the vehicle body.

In FIG. 16, the actuator 60 is provided with the tire rotation actuator 61 for driving the drive wheels 11 according to the command value supplied from the vehicle body basic control system 21, and also provided with the weight drive actuator 62 for moving the weight 134 in the up-and-down direction according to the command value supplied from the mechanical characteristic value estimation control system 22.

The control system characteristic value correction processing in the vehicle configured as described above as an embodiment will be described next.

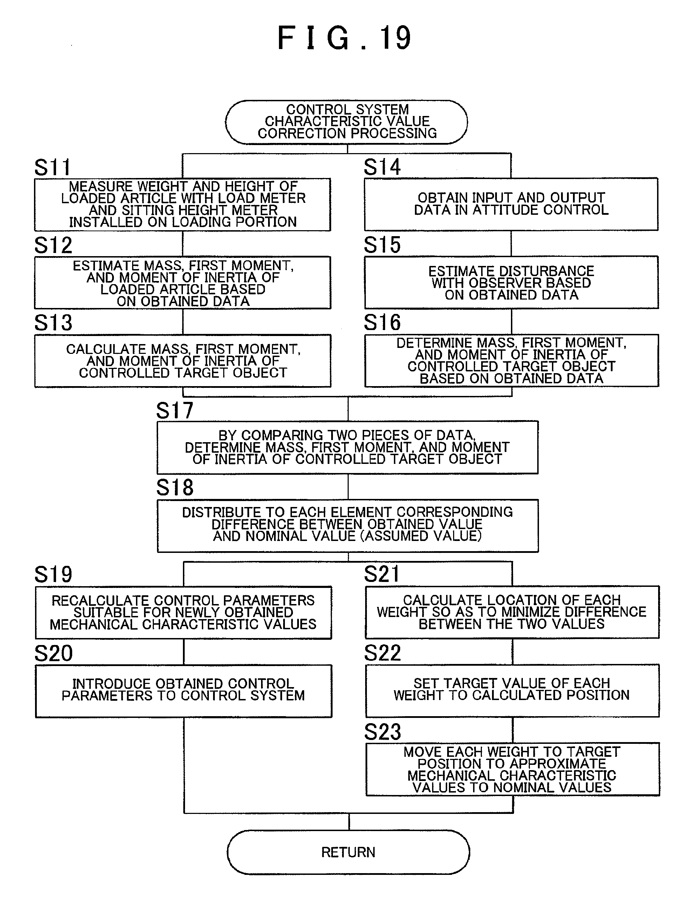

FIG. 19 is a flow chart showing contents of the control system characteristic value correction processing.

In this control system characteristic value correction processing, the actual mechanical characteristic values of the controlled target object (vehicle body + loaded article) are estimated (estimation process: steps 11 to 17), and subsequently, the control system characteristic values in the attitude control system are corrected based on the mechanical characteristic values obtained (control system characteristic value correction means: steps 18 to 23).

The contents of each step will be described below.

Through the steps 11 to 13 using the measured values of the load meter 51 and the sitting height meter 52, or through the steps 14 to 16 using the disturbance observer 23, the actual mechanical characteristic values are estimated.

Note that both of the above processes of the steps are executed in parallel for the estimation of the actual mechanical characteristic values.

First, the weight and the height of the loaded article are measured by the load meter 51 and the sitting height meter 52, respectively, of the sensor 50 for estimation of mechanical characteristic values provided at the loading portion 13, and supplied to the mechanical characteristic value estimation control system 22 (step 11).

Then, based on the obtained data, the mechanical characteristic value estimation control system 22 estimates a mass ($m_1$), a first moment ($m_1 l_1$), and a moment of inertia ($I_1 + m_1 l_1^2$) of the controlled target object as follows (step 12). That is, based on values $m_H$ and $\zeta_H$ of the mass and the sitting height, respectively, that have been obtained by the measurement, the mechanical characteristic value estimation control system 22 determines what the loaded article is, for example, by using the following threshold values.

   (a) If $m_H < 0.2$ kg and $\zeta_H < 0.01$ m, the loaded article is determined as "absent."
   (b) If $m_H > 8$ kg, and $\zeta_H > 0.3$ m, and furthermore $m_H/\zeta_H > 30$ kg/m, the loaded article is determined as "person."
   (c) In other cases (in cases except (a) and (b) described above), the loaded article is determined as "luggage."

In the discrimination criterion (b) for determining the "person" among the discrimination criteria described above, the body weight is set to a small value of 8 kg because a case is assumed in which a child is on board. In addition, by adding a weight per unit sitting height ($m_H/\zeta_H$) to the discrimination criterion for person, the person can be detected more accurately. In this case, in order not to determine small-sized heavy luggage (for example, an iron block) as a person when it is loaded, a condition for an upper limit, for example, $m_H/\zeta_H < p$ (for example, 80 kg/m), may be added to the discrimination criterion (in a logical AND condition). Note that each of the discrimination criteria and discrimination values are merely examples, and are changed as appropriate for use in the determination, depending on use conditions assumed.

As described below, the mechanical characteristic value estimation control system 22 estimates the height of center of gravity (height from the seating face 131) $h_H$ and the moment of inertia (about center of gravity) $I_H$ of the loaded article, in accordance with the type of the loaded article discriminated. In this way, by discriminating the loaded article and evaluating it using a formula corresponding to the type thereof, the more accurate mechanical characteristic values can be estimated.

   (a) If the loaded article is "absent,"

$$h_H = 0$$

$$I_H = 0$$

   (b) If the loaded article is "person,"

$$h_H = (\zeta_H/\zeta_{H,0})\, h_{H,0}$$

$$I_H = (m_H/m_{H,0})\, (\zeta_H/\zeta_{H,0})^2\, I_{H,0}$$

In the formulae above, $\zeta_{H,0}$, $h_{H,0}$, and $I_{H,0}$ are the standard values of the sitting height, the height of center of gravity, and the moment of inertia (about center of gravity) of a human body. The second embodiment uses the values $\zeta_{H,0} = 0.902$ m, $h_{H,0} = 0.264$ m, and $I_{H,0} = 5.19$ kgm$^2$ as the standard values.

   (c) If the loaded article is "luggage,"

$$h_H = ((1 - \gamma)/2)\, \zeta_H$$

$$I_H = ((1 - 3\gamma^2)/12)\, m_H \zeta_H^2$$

In the formulae above, $\gamma$ is a degree of eccentricity representing a downward displacement of the center of gravity. As the degree of eccentricity in the second embodiment, for example, the value $\gamma = 0.4$ is used. However, the value can be changed as appropriate, depending on use conditions assumed.

Next, the mechanical characteristic value estimation control system 22 calculates the mass ($m_1$), the first moment ($m_1 l_1$), and the moment of inertia ($I_1 + m_1 l_1^2$) that are the actual mechanical characteristic values of the controlled target object, from the measured value of the mass $m_H$ of the loaded article and the estimated values of the height of center of gravity $h_H$ and the moment of inertia $I_H$ of the loaded article (step 13). That is, denoting the mass, the height from the axis of the drive wheels 11 to the center of gravity, and the moment of inertia as ($m_H$, $l_H$, and $I_H$), respectively, for the loaded article, and ($m_c$, $l_c$, and $I_c$), respectively, for the vehicle body, the mechanical characteristic value estimation control system 22 obtains the mass $m_1$ of the controlled target object, the height $l_1$ from the axis of the drive wheels 11 to the center of gravity, and the moment of inertia $I_1$ by using the following formulae (a) to (c).

$$\text{(a) } m_1 = m_H + m_c$$

$$\text{(b) } l_1 = (m_H l_H + m_c l_c)/m_1$$

$$\text{(c) } I_1 = I_H + m_H (l_H - l_1)^2 + I_c + m_c (l_c - l_1)^2$$

Note that the mass $m_H$ of the loaded article is the measured value in the step 11, and the moment of inertia $I_H$ is the moment of inertia $I_H$ calculated in the step 12. In addition, denoting the height from the axis of the drive wheels 11 to the seating surface of the seating face 131 as $h_0$, the height to the center of gravity $l_H$ is obtained by using the expression, $l_H = h_0 + h_H$, from the height of center of gravity $h_H$ that has been calculated in the step 12.

On the other hand, the mechanical characteristic value estimation control system 22 estimates the disturbance (actual mechanical characteristic values) by using the disturbance observer 23, based on the motion of the vehicle body and the results of the attitude control (time history) (steps 14 to 16).

The mechanical characteristic value estimation control system 22 obtains an input $u(\rightarrow)$ (torque command value to the tire rotation actuator 61 in FIG. 16) and an output $y(\rightarrow)$ (detection values [speed and vehicle body tilt angle] of the sensor 40 for running and attitude control in FIG. 16) in the attitude control (step 14). Then, the mechanical characteristic value estimation control system 22 estimates the disturbance by using the input $u$ and the output $y$ obtained, and also by using the disturbance observer 23, on the assumption that, if a behavior is different from the behavior that is based on the mechanical characteristic values designed on the basis of the assumed rider, the difference is due to a disturbance based on the fact that an article different from the assumed rider is loaded (step 15). Subsequently, the mechanical characteristic value estimation control system 22 determines the mass, the first moment, and the moment of inertia of the controlled target object from the obtained data (step 16).

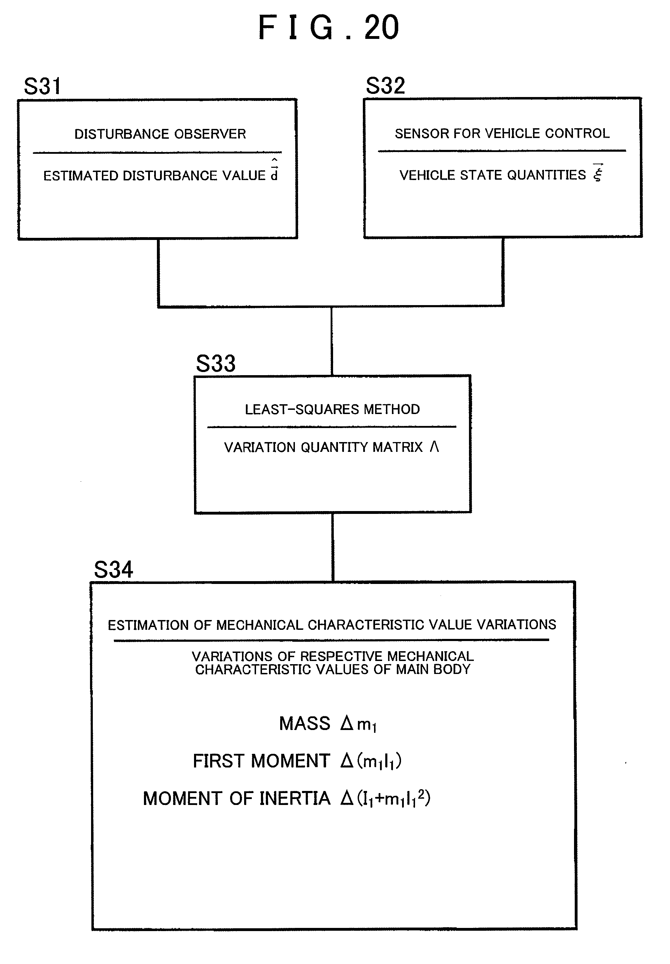

The processing to estimate the actual mechanical characteristic values by using the disturbance observer 23 will be described below. FIG. 20 shows an outline of a flow of estimation of the mechanical characteristic values. First, an estimated disturbance value $d(\rightarrow\wedge)$ is calculated by using the disturbance observer (step 31), and vehicle state quantities $\xi(\rightarrow)$ composed of a tire rotational angular acceleration $\theta_W(\cdot\cdot)$, a main body tilt angular acceleration $\theta_1(\cdot\cdot)$, and a main body tilt angle $\theta_1$ that are detected (or calculated based on detection values) by the sensor for vehicle control (the sensor 40 for running and attitude control) are determined (step 32). Note that the notation differs from that of the drawings for notational convenience, in this specification. As exemplified by the notation such as $d(\rightarrow\wedge)$ and $\theta(\cdot\cdot)$, the symbol in parentheses following a character is defined so that "$\rightarrow$" represents a vector quantity (matrix), "$\wedge$" represents an estimated value, and "$\cdot$" and "$\cdot\cdot$" represent a first-order derivative and second-order derivative, respectively, of the quantity indicated by the character preceding the parentheses.

Subsequently, the mechanical characteristic value estimation control system 22 estimates a variation quantity matrix A from the estimated disturbance value $d(\rightarrow\wedge)$ and the vehicle state quantities $\xi(\rightarrow)$ by a least-squares method (step 33), and then estimates respective mechanical characteristic value variations of the main body (controlled target object) from the variation quantity matrix A (step 34). The details of the estimation of the mechanical characteristic value variations will be described below.

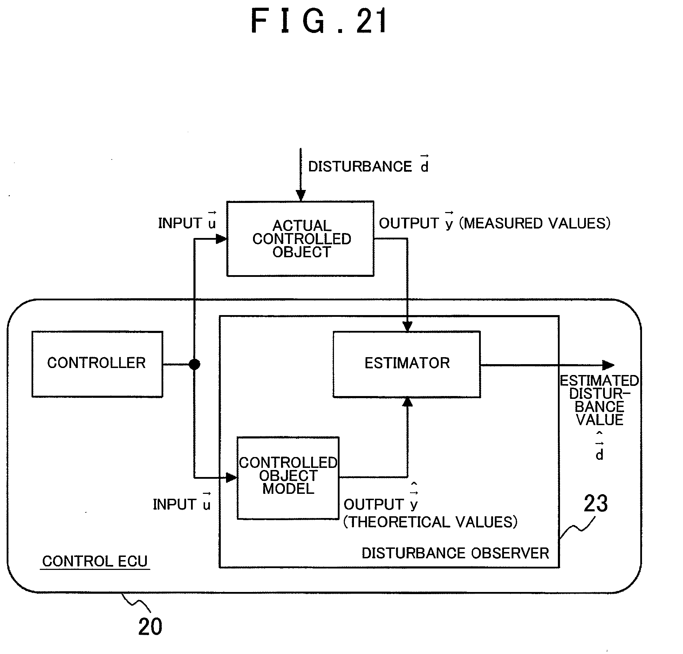

FIG. 21 conceptually shows the state of the disturbance estimation by the disturbance observer 23. In FIG. 21, the controller corresponds to the vehicle body basic control system 21, and the actual controlled object corresponds to the tire rotation actuator 61 (input) and the entire vehicle (controlled target object).

The disturbance observer 23 is composed of a controlled object model and an estimator. The controlled object model is a theoretical model of the attitude control system that uses the designed mechanical characteristic values based on assumed values for the rider.

The input $u(\rightarrow)$ from the controller is introduced to both the actual controlled object and the controlled object model. Then, an output $y(\rightarrow^\wedge)$ is produced as theoretical values from the controlled object model. On the other hand, an output is produced from the actual controlled object (controlled target object) as the output $y(\rightarrow)$ (measured values such as tilt angle θ) in response to the state in which the disturbance $d(\rightarrow)$ is applied.

Based on the difference between the output $y(\rightarrow^\wedge)$ as theoretical values and the output $y(\rightarrow)$ as measured values, the estimated value $d(\rightarrow^\wedge)$ of the disturbance applied is calculated by the estimator according to the following formulae 17. When performing this estimation (formulae 17), the estimator assumes the effect of a phenomenon in which, for example, a rider on board has a body weight or body shape of a different value from the designed value as a cause of disturbance. That is, the estimator assumes the effect of the variation quantity (= the difference of the mechanical characteristic value form the nominal value [assumed value]) as a disturbance, and the disturbance observer 23 performs the estimation. In the second embodiment, this estimation uses a minimal order observer to reduce calculation time. However, a full-order observer may be used if robustness is given a higher priority. The estimated speed is determined by a feedback gain L of the disturbance observer 23. Here, because excessively high estimated speed makes the estimation unstable, a certain amount of time is required for the estimation.

Formulae 17

$$\dot{\hat{d}} \;=\; \vec{z} \;+\; \mathbf{L}\,\vec{y}$$

$$\dot{\vec{z}} \;=\; -\mathbf{L}\left\{\mathbf{D}\,\vec{z} \;+\; (\mathbf{A} + \mathbf{DL})\,\vec{y} \;+\; \mathbf{B}\,\vec{u}\right\}$$

Next, derivation of the above-shown formulae 17 for calculating the estimated disturbance value $d(\rightarrow^\wedge)$ will be described. In the second embodiment, the mechanical model of the vehicle attitude control system is shown by FIG. 8. A balancer shown in FIG. 8 is a weight body for performing the attitude control of the vehicle, and moves in the direction perpendicular to the axle and the vehicle center axis, as shown as an example. The weight 134 that moves in the up-and-down direction is included in the main body. The symbols in FIG. 8 are as described in the

first embodiment.

The mechanical model shown in FIG. 8 is expressed by the linear second-order differential equation of formula 18. The values in the formula 18 are as shown in formulae 19, respectively. The values of $I_{W,a}$ and $I_{12,a}$ in the formulae 19 are as follows.

$$I_{W,a} = I_W + (m_1 + m_2 + m_W)\,R_W{}^2$$

$$I_{12,a} = (I_1 + m_1 l_1{}^2) + (I_2 + m_2 l_2{}^2)$$

Formula 18

$$\mathbf{M}_S \ddot{\vec{x}}_S + \mathbf{C}_S \dot{\vec{x}}_S + \mathbf{K}_S \vec{x}_S = \mathbf{P}_u \vec{u} + \mathbf{P}_d \vec{d}$$

Formulae 19

$$\vec{x}_S = \begin{bmatrix} \theta_W \\ \theta_1 \\ \lambda_2 \end{bmatrix} \qquad \vec{u} = \begin{bmatrix} \tau_W \\ S_B \end{bmatrix}$$

$$\mathbf{M}_S = \begin{bmatrix} I_{W,a} & (m_1\ell_1 + m_2\ell_2)R_W & m_2R_W \\ (m_1\ell_1 + m_2\ell_2)R_W & I_{12,a} & m_2\ell_2 \\ m_2R_W & m_2\ell_2 & m_2 \end{bmatrix}$$

$$\mathbf{C}_S = \begin{bmatrix} D_W & 0 & 0 \\ 0 & D_1 & 0 \\ 0 & 0 & D_2 \end{bmatrix} \qquad \mathbf{K}_S = \begin{bmatrix} 0 & 0 & 0 \\ 0 & -(m_1\ell_1 + m_2\ell_2)g & -m_2g \\ 0 & -m_2g & 0 \end{bmatrix}$$

$$\mathbf{P}_u = \begin{bmatrix} 1 & 0 \\ -1 & 0 \\ 0 & 1 \end{bmatrix}$$

Denoting the vehicle state quantities as $\xi(\rightarrow)$, the variation quantity matrix as A, and a disturbance penetration path as $P_d$, the disturbance $d(\rightarrow^\wedge)$ by the change in the rider parameters is expressed by the following formulae 20. In the formulae 20, the elements $\theta_1$, $\theta_1(\cdot\cdot)$, and $\theta_W(\cdot\cdot)$ of the vehicle state quantities $\xi(\rightarrow)$ are the main body (vehicle body) tilt angle, the main body tilt angular acceleration, and the tire rotational angular acceleration, respectively, as described above. Note that the elements of the third row of the disturbance penetration path $P_d$ are such that $Pd_{31} = 0$ and $Pd_{32} = 0$. Therefore, the variation in the parameters of the main body does not have a direct influence on motion characteristics of the balancer.

Formulae20

$$\vec{d} = -\Lambda \ddot{\vec{\xi}}$$

$$\Lambda = \begin{bmatrix} R_W{}^2 \Delta m_1 & R_W \Delta(m_1 \ell_1) & 0 \\ R_W \Delta(m_1 \ell_1) & \Delta(I_1 + m_1 \ell_1{}^2) & -g\Delta(m_1 \ell_1) \end{bmatrix}$$

$$\vec{\xi} = \begin{bmatrix} \ddot{\theta}_W \\ \ddot{\theta}_1 \\ \theta_1 \end{bmatrix} \qquad \mathbf{P}_d = \begin{bmatrix} 1 & 0 \\ 0 & 1 \\ 0 & 0 \end{bmatrix}$$

In addition, the formula 18 is expressed in the form of general state equations as shown by formulae 21 so as to be easily handled by the disturbance observer 23. The values in the formulae 21 are as shown in formulae 22, respectively, where I represents an identity matrix.

Formulae21

$$\dot{\vec{x}} = \mathbf{A}\vec{x} + \mathbf{B}\vec{u} + \mathbf{D}\vec{d} \qquad \vec{y} = \mathbf{C}\vec{x}$$

Formulae22

$$\vec{x} = \begin{bmatrix} \vec{x}_S \\ \dot{\vec{x}}_S \end{bmatrix} \qquad \mathbf{A} = \begin{bmatrix} 0 & \mathbf{I} \\ -\mathbf{M}_S^{-1}\mathbf{K}_S & -\mathbf{M}_S^{-1}\mathbf{C}_S \end{bmatrix}$$

$$\mathbf{B} = \begin{bmatrix} 0 \\ \mathbf{M}_S^{-1}\mathbf{P}_u \end{bmatrix} \qquad \mathbf{C} = \mathbf{I} \qquad \mathbf{D} = \begin{bmatrix} 0 \\ \mathbf{M}_S^{-1}\mathbf{P}_d \end{bmatrix}$$

The disturbance observer 23 obtains the input u (torque command value to the tire rotation actuator 61 shown in FIG. 16) and the output y (detection values [speed and vehicle body tilt angle] of the sensor 40 for running and attitude control shown in the same figure) in the attitude control. Then, the disturbance observer 23 calculates the estimated value $d(\rightarrow\wedge)$ of the disturbance by solving the above-shown formulae 17 in the estimator (FIG. 21) (step 32). Note that, although the disturbance observer 23 uses the minimal order observer, the full-order observer can be used for the estimation.

Here, with respect to the estimated disturbance value $d(\rightarrow\wedge)$ in the model indicated by the formulae 17, it is assumed that $d(\rightarrow\wedge\cdot) = 0$ (the speed of variation of disturbance is lower than the estimated speed thereof). As a result, the reliability of a high-frequency component is low. Therefore, in the second embodiment, as described later, the reliability of the high-frequency component is ensured not by using the disturbance observer 23 for the high-frequency component, but by using the values calculated from measured values of the measuring instruments (the sensor 50 for estimation of mechanical characteristic values) (steps 11 to 13) for the high-frequency component.

On the other hand, the disturbance observer 23 obtains the vehicle state quantities $\xi(\rightarrow)$ from the sensor 40 for running and attitude control (step 32). Then, the disturbance observer 23 estimates the variation quantity matrix A based on the time history of the vehicle state quantities $\xi(\rightarrow)$ and the estimated disturbance value $d(\rightarrow\wedge)$ by using the least-squares method (step 33). That is, based on the discrete-time data series of N points $\xi^{(k)}(\rightarrow)$ and $d^{(k)}(\rightarrow\wedge)$, the disturbance observer 23 estimates the variation quantity matrix A shown in formula 24 (the same formula as that in the formulae 20) by using the following formula 23. Note that the reference time $T_{ref} = N\Delta t$ ($\Delta t$ is a time interval of discrete time) is set to a longer time than the estimation time of the observer.

Note that, in the formula 23, calculation may be simplified by ignoring the correlation in the $\xi(\rightarrow)$, that is, by making the non-diagonal components of the tensor product $\xi^{(k)}(\rightarrow)\xi^{(k)}(\rightarrow)$ to be zero.

Formula23

$$\Lambda^T = -\left\{\sum_{k=1}^{N}(\vec{\xi}^{(k)}\vec{\xi}^{(k)})\right\}^{-1}\left\{\sum_{k=1}^{N}(\vec{\xi}^{(k)}\hat{\vec{d}}^{(k)})\right\}$$

Formula24

$$\Lambda = \begin{bmatrix} R_w^2\Delta m_1 & R_w\Delta(m_1\ell_1) & 0 \\ R_w\Delta(m_1\ell_1) & \Delta(I_1 + m_1\ell_1^2) & -g\Delta(m_1\ell_1) \end{bmatrix}$$
$$= \begin{bmatrix} \Lambda_{1\,1} & \Lambda_{1\,2} & \Lambda_{1\,3} \\ \Lambda_{2\,1} & \Lambda_{2\,2} & \Lambda_{2\,3} \end{bmatrix}$$

Subsequently, based on the values of the respective components in the estimated variation quantity matrix, the disturbance observer 23 estimates a mass variation $\Delta m_1$, a first-moment variation $\Delta(m_1 l_1)$, and a moment-of-inertia variation $\Delta(I_1 + m_1 l_1^2)$ as three parameter variation quantities of the main body (controlled target object), as shown by formulae 25 (step 34).

Formulae 25

$$\Delta m_1 = (1/R_w^2) \Lambda_{11}$$

$$\Delta (m_1 l_1) = -(1/g) \Lambda_{23} = (1/R_w) \Lambda_{12} = (1/R_w) \Lambda_{21}$$

$$\Delta (I_1 + m_1 l_1^2) = \Lambda_{22}$$

As shown by the formulae 25, the first-moment variation $\Delta(m_1 l_1)$ can be estimated (calculated) from any one of three elements $\Lambda_{23}$, $\Lambda_{12}$, and $\Lambda_{21}$ of the variation quantity matrix. The elements $\Lambda_{23}$, $\Lambda_{12}$, and $\Lambda_{21}$ correspond to the state quantities $\theta_1$, $\theta_1(\cdot\cdot)$, and $\theta_W(\cdot\cdot)$, respectively. Consequently, in the second embodiment, a highly accurate value of the first-moment variation $\Delta(m_1 l_1)$ can be calculated by using the formula corresponding to the one with the maximum range of variation within the reference time among the three state quantities $\theta_1$, $\theta_1(\cdot\cdot)$, and $\theta_W(\cdot\cdot)$.

After estimating the mechanical characteristic values from the measured values of the sensor 50 for estimation of mechanical characteristic values and also estimating the mechanical characteristic values by the disturbance observer 23 through the processing described above, the mechanical characteristic value estimation control system 22 compares the two data to determine the mechanical characteristic values, that is, the mass, the first moment (height of center of gravity), and the moment of inertia of the controlled target object (FIG. 19 and step 17). Note that, in the explanation below, the mechanical characteristic values estimated from the measured values of the sensor 50 for estimation of mechanical characteristic values are denoted as Pk, and the mechanical characteristic values estimated by the disturbance observer 23 are denoted as Pg.

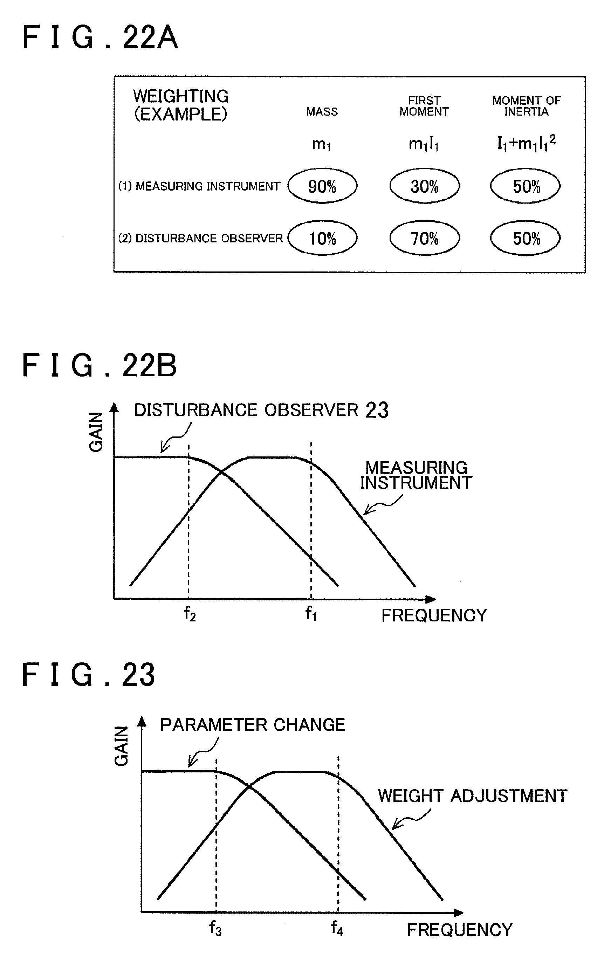

In the second embodiment, the mechanical characteristic values Pk and Pg are estimated by the two methods, and by using the two methods as described in (1) to (4) below, more accurate estimation of the mechanical characteristic value variations is achieved. FIG. 22 shows an example of selective use of the mechanical characteristic values Pk and Pg.

(1) Selective Use Depending on Reliability

Because the estimation system that has a high reliability in evaluation differs depending on each of the three elements of the mechanical characteristic values, the weightings are applied depending on the degree of reliability, as shown in FIG. 22A. Measuring instruments have a high reliability with respect to the mass ($m_1$), and the disturbance observer has a high reliability with respect to the first moment ($m_1 l_1$). Therefore, as shown in FIG. 22A, the mechanical characteristic values Pk and Pg are used with weightings given as percentages shown below. Note that the percentages for the both values are merely examples, and other percentages can be employed.

For the mass, 90% of Pk and 10% of Pg are used.
For the first moment, 30% of Pk and 70% of Pg are used.
For the moment of inertia, 50% of Pk and 50% of Pg are used.

(2) Selective Use Depending on Frequency Component

The mechanical characteristic values Pk that are calculated by using the measured values (steps 11 to 13) and the mechanical characteristic values Pg that are estimated by the disturbance observer 23 (steps 14 to 16) have upper limit frequencies f1 and f2, respectively, below which the evaluation is possible. That is, the mechanical characteristic values Pk have the upper limit f1 determined by hardware limitations such as natural frequency and response performance. On the other hand, the mechanical characteristic values Pg by the disturbance observer 23 have the upper limit f2 for stability (robustness) determined from the estimated speed (pole).

Therefore, in the second embodiment, on the basis of the upper limits f1 and f2, the weightings based on the respective frequency components are determined for the respective frequency components of the both mechanical characteristic values Pk and Pg, as exemplified in FIG. 22B.

(a) For the mechanical characteristic values Pg by the disturbance observer 23, the weighting is reduced as the frequency increases beyond the upper limit f2.

(b) For the mechanical characteristic values Pk based on the measured values, the weighting is reduced as the frequency increases beyond the upper limit f1.

(c) In the range in which the reliability of the disturbance observer 23 is high (in the frequency range at and below the upper limit f2), the weighting for the mechanical characteristic values Pg by the disturbance observer 23 is kept large, and the weighting for the mechanical characteristic values Pk based on the measured values is gradually reduced.

(d) At a frequency of f1 or more at which only the mechanical characteristic values Pk based on the measured values are used, the weighting has a value of 1 or less, and at a frequency of less than f1, the sum of the both weightings has a value of 1.

(3) Selective Use Depending on Driving Condition

Unless changes in acceleration and attitude are large, and unless sufficient time for observation is available, the disturbance observer cannot perform the estimation with high accuracy. Consequently, at start of control (during a period from the start of control to a predetermined time T1) or during mild driving (in the case that the rates of change in acceleration and attitude angle are $\alpha1\%$ or less), a 100% of the mechanical characteristic values Pk based on the measured values are used, and the values thereof are provided as initial values for the disturbance observer. In other cases, the estimation is performed according to (1) or (2) described above.

(4) Combined Use as Fail-Safe

In the second embodiment, a value of either of the mechanical characteristic values Pk or Pg is used as a failure determination indicator for the value of the counterpart thereof. That is, the difference between the both values is evaluated for each frequency component, and if the difference is large, one that is judged, through detailed examination, to have a higher possibility of error is regarded as failed. If one is determined as failed, the other characteristic value is used with a weighting of 1. Note that the values Pk and Pg are always used as fail-safe determination indicators for judgment of failure, independently from (1) to (3) described above.

After determining the mechanical characteristic value variations (denoted as Pf) to be employed for respective frequency components (step 17), the mechanical characteristic value estimation control system 22 appropriately distributes the corresponding mechanical characteristic value variations Pf to respective corresponding mechanisms (systems) (step 18). Here, the respective corresponding mechanisms (systems) refer to the mechanism for correction of the control parameters themselves (hereinafter called "parameter changing system") and the mechanism for adjustment of the control system characteristic values by the weight (hereinafter called "weight adjustment mechanism"), outlined in FIGS. 14C and 14D, respectively.

In order to distribute the mechanical characteristic value variations Pf to the parameter changing system and the weight adjustment mechanism, one of the following methods is used.

(1) Selective Use Depending on Frequency Component

Specifically, the weight adjustment mechanism is used in the comparatively high frequency range in which the parameter changing system takes a long time to recalculate the control parameters. The parameter changing system has an upper limit frequency f4 from the standpoint of calculation time and stability (robustness) whereas the weight adjustment mechanism has an upper limit frequency f3 determined by hardware limitations and also has a necessity of avoiding the fundamental frequency band of the attitude control system for preventing cross coupling with the attitude control system. Therefore, as shown in FIG. 23, the mechanical characteristic value variations Pf that have been determined in the step 17 are distributed to the parameter changing system and the weight adjustment mechanism, according to the weightings corresponding to the frequency components. Note that the systems in the second embodiment ignore considerably quick variations by cutting off the high-frequency components, as shown in FIG. 23, because the systems control quasi-steady variations (variations at a lower speed than the characteristic speed of the attitude control system; for example, changes in the order of several seconds) of the mechanical characteristic values.

(2) Substitution in Terms of Capability Limitations

On the other hand, the weight adjustment mechanism has a qualitative limitation that the mass cannot be adjusted (increased or decreased), and a quantitative limitation that the mass and the movable travel of the weight are limited. Therefore, the parameter changing system responds to the conditions exceeding the limitations of the weight adjustment mechanism, and makes the corrections.

(3) Substitution as Fail-Safe

For example, the parameter changing system can fail in recalculation of the control parameters; that is, for example, a solution can diverge when solving an implicit equation by an iterative calculation method. In addition, the weight adjustment mechanism can suffer a hardware failure. Therefore, in the second embodiment, when one system has failed, the other system is used to compensate it.

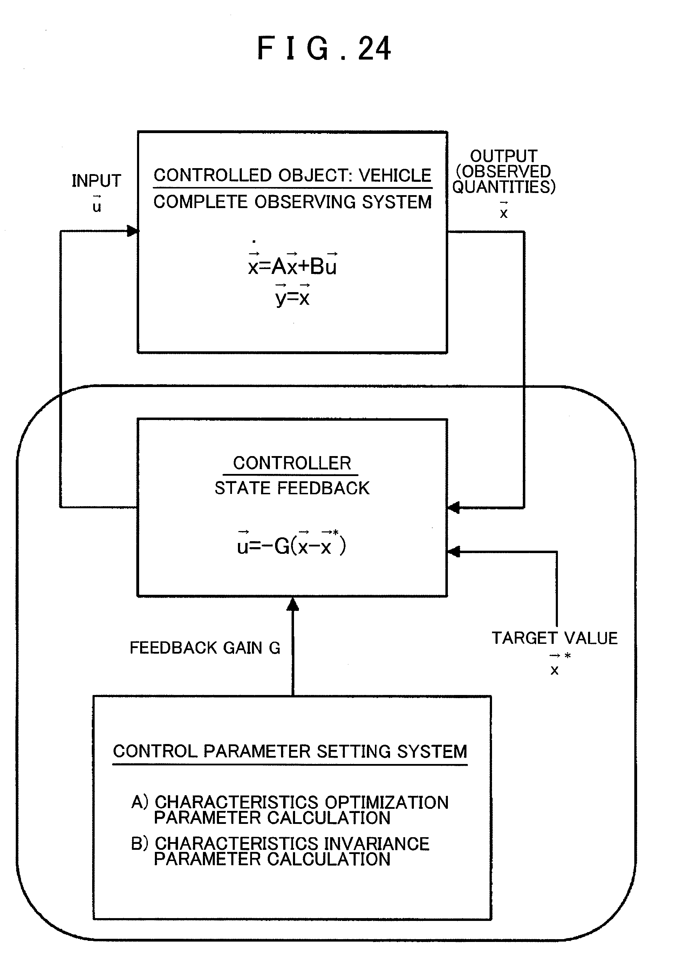

After determining the mechanical characteristic value variations Pf to be distributed, the mechanical characteristic value estimation control system 22 corrects the control system characteristic values of the attitude control system by using the parameter changing system and the weight adjustment mechanism (steps 19 and 20, and steps 21 to 23). FIG. 24 conceptually shows the correction of the control parameters by the parameter changing system. As shown in FIG. 24, the control parameters are corrected to those suitable for the conditions of distribution (mass, first moment, and moment of inertia) of the mechanical characteristic value variations Pf.

The controlled object model for the above is expressed by formula 26 that is further expressed in the form of system state equations as shown by formulae 27 so as to be easily handled. The symbols $x_S(\rightarrow)$, $u(\rightarrow)$, $M_S$, $C_S$, and $K_S$ shown in the formula 26 are defined as shown in the formulae 19 given above. Note that, unlike the model of the disturbance observer for estimating the disturbance (formula 18), the formula 26 does not include the term $P_d d(\rightarrow)$. Note also that, unlike the system state equation (formulae 21), the formulae 27 do not include the term $Dd(\rightarrow)$.

Formula26

$$\mathbf{M}_S \ddot{\vec{x}}_S + \mathbf{C}_S \dot{\vec{x}}_S + \mathbf{K}_S \vec{x}_S = \mathbf{P}_u \vec{u}$$

Formulae27

$$\dot{\vec{x}} = \mathbf{A}\vec{x} + \mathbf{B}\vec{u} \qquad \vec{y} = \vec{x}$$

$$\mathbf{A} = \begin{bmatrix} \mathbf{0} & \mathbf{I} \\ -\mathbf{M}_S^{-1}\mathbf{K}_S & -\mathbf{M}_S^{-1}\mathbf{C}_S \end{bmatrix} \qquad \mathbf{B} = \begin{bmatrix} \mathbf{0} \\ \mathbf{M}_S^{-1}\mathbf{P}_u \end{bmatrix}$$

The mechanical characteristic value estimation control system 22 recalculates the control parameters (feedback gain G) optimal for the distributed mechanical characteristic value variations Pf according to the formula 26 or the formulae 27 shown above (step 19), and introduces the obtained control parameters to the control system (step 20). Here, there are two methods to calculate the control parameters for the distributed mechanical characteristic value variations Pf: one is the characteristics optimization parameter calculation, and the other is the characteristics invariance parameter calculation.

The characteristics optimization parameter calculation obtains the gain G that is optimal for the conditions (distributed mechanical parameter values Pf) by, for example, recalculating the feedback gain G from the first, using an optimal regulator or the like. On the other hand, the characteristics invariance parameter calculation calculates the gain G that changes the designed control system characteristics as little as possible.

Although the characteristics optimization parameter calculation obtains the gain that is optimal for the conditions, it is a disadvantage that the calculation takes a long time. In contrast, the characteristics invariance parameter calculation has the advantages, for one thing, that a reasonably appropriate gain, though not an optimal gain, can be calculated in a short time, and for another thing, that the detailed adjustment when designing the control system can be used effectively. In the second embodiment, the two control parameter calculation methods (setting systems) are selectively used as follows. That is, the control parameters are tentatively set at first by the characteristics invariance parameter calculation, and finally set to the optimal values after the optimal values are calculated by the characteristics optimization parameter calculation. Note that the gain is changed smoothly through a linear transition of the respective parameters in order to prevent the attitude control from becoming unstable by a sudden change of the gain.

Here, the characteristics invariance parameter calculation in the setting of the control parameters will be described. In the attitude control system using state feedback, the model (nominal model) with the control parameters before correction is expressed by formulae 28, whose characteristic equation is expressed by formula 29.

Formulae 28

$$\dot{\vec{x}} = \mathbf{A}\vec{x} + \mathbf{B}\vec{u} \qquad \vec{u} = -\mathbf{G}(\vec{x} - \vec{x}^{*})$$

$$\vec{x} = \begin{bmatrix} \vec{x}_S \\ \dot{\vec{x}}_S \end{bmatrix} \quad \mathbf{A} = \begin{bmatrix} \mathbf{0} & \mathbf{I} \\ -\mathbf{M}_S^{-1}\mathbf{K}_S & -\mathbf{M}_S^{-1}\mathbf{C}_S \end{bmatrix} \quad \mathbf{B} = \begin{bmatrix} \mathbf{0} \\ \mathbf{M}_S^{-1}\mathbf{P}_u \end{bmatrix}$$

$$\mathbf{G} = \begin{bmatrix} \mathbf{G}_K & \mathbf{G}_C \end{bmatrix}$$

Formula 29

$$\det(s\mathbf{I} - \mathbf{A} + \mathbf{B}\mathbf{G}) = 0$$

Now, when the mechanical characteristics of the actual controlled object that are represented by formulae 30 are taken into account of the nominal model before correction, the estimation model thereof is expressed by formulae 31. In this case, the characteristic equation is expressed by formula 32. Note that, in the controlled object characteristics represented by the formulae 30, $M_S$ and $K_S$ include the distributed mechanical characteristic value variations (mass, first moment, and moment of inertia), as shown by the formulae 19 described above.

Formulae 30

$$\tilde{\mathbf{M}}_S = \mathbf{M}_S + \Delta\mathbf{M}_S, \quad \tilde{\mathbf{K}}_S = \mathbf{K}_S + \Delta\mathbf{K}_S$$

Formulae31

$$\dot{\tilde{x}} = \tilde{A}\vec{x} + \tilde{B}\vec{u} \qquad \vec{u} = -\tilde{G}(\vec{x} - \vec{x}^{*})$$

$$\vec{x} = \begin{bmatrix} \vec{x}_s \\ \dot{\vec{x}}_s \end{bmatrix} \quad \tilde{A} = \begin{bmatrix} 0 & I \\ -\tilde{M}_s^{-1}\tilde{K}_s & -\tilde{M}_s^{-1}C_s \end{bmatrix} \quad B = \begin{bmatrix} 0 \\ \tilde{M}_s^{-1}P_u \end{bmatrix}$$

$$\tilde{G} = \begin{bmatrix} \tilde{G}_K & \tilde{G}_C \end{bmatrix}$$

Formula32

$$\det(s I - \tilde{A} + \tilde{B}\tilde{G}) = 0$$

The mechanical characteristic value estimation control system 22 corrects the feedback gain G so that the pole placement of the closed-loop system (basic characteristics of the feedback control system) is changed as little as possible. Formulae 33 represent the condition under which the characteristic equations (formulae 29 and 32, respectively) of the closed-loop system are the same between before and after the change of the control parameters (gain).
Formulae33

$$P_u \Delta G_K = \Delta M_S M_S^{-1}(P_u G_K - K_S) + \Delta K_S$$

$$P_u \Delta G_C = \Delta M_S M_S^{-1}(P_u G_C - C_S)$$

The mechanical characteristic value estimation control system 22 obtains gain correction values $\Delta G_K$ and $\Delta G_C$ from both of the formulae 33. Here, if a matrix $P_u$ is regular, a correct calculation is possible so as to change the gains without any change in the pole placement. In contrast, if the matrix $P_u$ is not regular, the gains are approximately obtained by least-squares method or the like because there is no gain that completely satisfies the formulae shown above. Because the Pu is generally not regular in the attitude control of a one-wheeled vehicle or a two-wheeled vehicle, the mechanical characteristic value estimation control system 22 according to the second embodiment approximately obtains the gain correction values $\Delta G_K$ and $\Delta G_C$. Note that the stability of the closed-loop system needs to be checked by calculation after the feedback gain G thereof has been corrected by using the calculated gain correction values $\Delta G_K$ and $\Delta G_C$, and if the check result indicates instability, the correction is not executed so as to continue the attitude control with the feedback gain before correction.

Next, the correction of the control system characteristic values of the attitude control by the weight adjustment mechanism will be described. The mechanical characteristic value estimation control system 22 calculates the positioning of the weight 134 (refer to FIG. 18) so as to minimize the difference between the values based on the distributed mechanical characteristic values and the nominal values (control assumed values) (step 21), and sets the calculated position as the target position of the weight (step 22). Then, the mechanical characteristic value estimation control system 22 outputs a command value to the weight drive actuator 62 for moving the weight to the target position. As a result, the weight 134 mounted on the vehicle body is moved to the target position by the weight drive actuator 62, and thus the mechanical characteristic values are brought close to the nominal values (step 23).

Specifically, according to the following formulae 34, the weight $m_b^{(k)}$ is moved in the up-and-down direction by the amount of $\Delta h_b^{(k)}$ to balance out the discrepancies of the actual mechanical characteristic values from the nominal values (control assumed values), where the discrepancies are represented by the first moment $\Delta(m_1 l_1)$ and the (second) moment of inertia $\Delta(I_1 + m_1 l_1^2)$ (relative to axle). Here, the formulae 34 assumes the case in which there are N weights arranged so as to be capable of moving up and down independently to each other, where $^{(k)}$ indicates the k-th weight of the N weights, and $l_b^{(k)}$ represents the distance from the axle to the reference position of the weight.

Formulae 34

$$\sum_{k=1}^{N}\left(m_b^{(k)}\Delta h_b^{(k)}\right)=-\Delta(m_1 \ell_1) \quad \cdots (a)$$

$$\sum_{k=1}^{N}\left(m_b^{(k)}\Delta h_b^{(k)}(2\ell_b^{(k)}+\Delta h_b^{(k)})\right)=-\Delta(I_1+m_1 \ell_1^{2}) \quad \cdots (b)$$

Each weight is moved to the target position by the servo control determined from the formulae 34 shown above (where the movement is slower than the characteristic speed of the existing attitude control system). In this case, both of the parameters (first moment and moment of inertia) can be adapted by using two of the weights 134. In addition, by further increasing the weights 134, the travel distance of the weights and the energy consumption can be reduced. For example, in the case of a single weight 134, either the first moment or the moment of inertia is adjusted by using (a) or (b), respectively, of the formulae 34. In this case, although only one of the two is directly adjusted, the other one also generally changes in the direction of improvement along with the adjustment of one of the first moment and the moment of inertia.

In the case of two weights 134, both of the first moment and the moment of inertia are adjusted by using (a) and (b), respectively, of the formulae 34. Moreover, in the case of three or more weights 134, the control with minimum travel distance of the weights 134 or the control with minimum energy consumption is possible, in addition to the adjustment of the both parameters.

Note that, as shown in FIG. 18B, the control is also possible by changing the height of the seat, in addition to or instead of moving the weights 134.

In the second embodiment described above, an example of the attitude control in the fore-and-aft direction of the single-axle two-wheeled vehicle has been described. In the present invention, the methods of the mechanical characteristic value estimation and the control system characteristic value correction of the second embodiment can also be applied to the attitude control of the one-wheeled vehicle and to the attitude control in the right-and-left direction of the one-wheeled vehicle or the two-wheeled vehicle.

**Claims**

1. A vehicle having a single axle arranged with drive wheels and controlling attitude of a vehicle body, **characterized in that** the vehicle comprises:

displacement amount calculation means for calculating a physical quantity corresponding to an amount of displacement of an actual center of gravity of the vehicle that is a center of gravity of the vehicle in reality, from a reference axis connecting a designed center of gravity of the vehicle defined in design with the axle; and center-of-gravity position control means for moving the position of the actual center of gravity of the vehicle so as to lie on the reference axis, based on the calculated physical quantity.

2. The vehicle according to claim 1, **characterized in that** the vehicle further comprises:

a loading portion for loading a weight body such as luggage or a rider; and
a load sensor arranged at the loading portion; and
the displacement amount calculation means calculates a torque value as a physical quantity corresponding to the amount of displacement of the actual center of gravity of the vehicle, from a detection value of the load sensor.

3. The vehicle according to claim 1, **characterized in that** the displacement amount calculation means calculates the torque value as a physical quantity corresponding to the amount of displacement of the actual center of gravity of the vehicle, with a disturbance observer.

4. The vehicle according to claim 1, 2, or 3, **characterized in that** the center-of-gravity position control means moves the actual center of gravity of the vehicle so as to lie on the reference axis by controlling a tilt angle of the vehicle body in response to the calculated physical quantity.

5. The vehicle according to claim 1, 2, or 3, **characterized in that**
the vehicle further comprises a balancer that is movably arranged relative to the vehicle body, and
the center-of-gravity position control means moves the actual center of gravity of the vehicle so as to lie on the reference axis by moving the balancer in response to the calculated physical quantity.

6. The vehicle according to claim 1, 2, or 3, **characterized in that**
the vehicle body includes a main body and a loading portion that is movably arranged relative to the main body and that takes on a weight body such as luggage or a rider, and
the center-of-gravity position control means moves the actual center of gravity of the vehicle so as to lie on the reference axis by moving the loading portion in response to the calculated physical quantity.

7. The vehicle according to claim 1, **characterized in that** the vehicle further comprises:

a loading portion for loading a weight body such as luggage or a rider;
a load sensor arranged at the loading portion;
first torque calculation means for calculating a torque value as a physical quantity corresponding to the amount of displacement of the actual center of gravity of the vehicle, from a detection value of the load sensor; and
second torque calculation means for calculating a torque value as a physical quantity corresponding to the amount of displacement of the actual center of gravity of the vehicle, with a disturbance observer; and
the displacement amount calculation means calculates a physical quantity corresponding to the amount of displacement of the actual center of gravity of the vehicle from the reference axis, based on the first and the second torque values calculated.

8. The vehicle according to claim 1, **characterized in that** the displacement amount calculation means calculates a physical quantity corresponding to the amount of displacement of the actual center of gravity of the vehicle from the reference axis, based on frequency components of the first and the second torque values calculated.

9. The vehicle according to claim 1, 2, or 3, **characterized in that**
the center-of-gravity position control means comprises:

first movement means for moving the actual center of gravity of the vehicle so as to lie on the reference axis by controlling a tilt angle of the vehicle body in response to a physical quantity;
second movement means for moving the actual center of gravity of the vehicle so as to lie on the reference axis by moving the balancer that is movably arranged relative to the vehicle body in response to a physical quantity;
third movement means for moving the actual center of gravity of the vehicle so as to lie on the reference axis by moving the loading portion relative to the vehicle main body in response to a physical quantity; and
physical quantity distribution means for distributing the physical quantity calculated by the displacement amount calculation means to the first, second, and third movement means.

10. The vehicle according to claim 9, **characterized in that** the physical quantity distribution means distributes the physical quantity based on the frequency components of the physical quantity calculated by the displacement amount calculation means.

11. A vehicle that controls attitude of a vehicle body, **characterized in that** the vehicle comprises:

estimation means for estimating actual mechanical characteristic values of a controlled target object in an attitude control system for the vehicle body; and
control system characteristic value correction means for correcting control system characteristic values in the attitude control system, based on the actual mechanical characteristic values estimated.

12. The vehicle according to claim 11, **characterized in that** the estimation means estimates, as the mechanical characteristic values, a mass of a weight body such as luggage or a rider loaded on a loading portion, a height of center of gravity of the weight body, and a moment of inertia of the weight body.

13. The vehicle according to claim 11 or 12, **characterized in that** the vehicle further comprises:

a loading portion for loading a weight body such as luggage or a rider;
a load sensor arranged at the loading portion; and
a height sensor that measures a height of the weight body; and
the estimation means estimates the mechanical characteristic values based on detection values of the load sensor and the height sensor.

14. The vehicle according to claim 11 or 12, **characterized in that** the estimation means estimates the mechanical characteristic values by using a disturbance observer.

15. The vehicle according to claim 11 or 12, **characterized in that** the vehicle further comprises:

a loading portion for loading a weight body such as luggage or a rider;
a load sensor arranged at the loading portion;
a height sensor that measures a height of the weight body;
direct estimation means for estimating the mechanical characteristic values based on detection values of the load sensor and the height sensor; and
indirect estimation means for estimating the mechanical characteristic values with a disturbance observer, and
the estimation means estimates the mechanical characteristic values based on the estimated values by the direct estimation means and the indirect estimation means.

16. The vehicle according to claim 15, **characterized in that** the estimation means estimates the mechanical characteristic values based on frequency components of the estimated values by the direct estimation means and the indirect estimation means.

17. The vehicle according to any one of claims 11 to 16, **characterized in that** the control system characteristic value correction means corrects the control system characteristic values by changing control parameters in the attitude control system for the vehicle body in response to the mechanical characteristic values estimated.

18. The vehicle according to any one of claims 11 to 16, **characterized in that** the control system characteristic value correction means includes vehicle body deforming means for correcting the control system characteristic values by deforming a shape of the vehicle body in response to the mechanical characteristic values estimated.

19. The vehicle according to any one of claims 11 to 16, **characterized in that**
the control system characteristic value correction means comprises:

control parameter correction means for correcting the control system characteristic values by changing control parameters in the attitude control system for the vehicle body in response to the mechanical characteristic values estimated;
vehicle body deforming means for correcting the control system characteristic values by deforming a shape of the vehicle body in response to the mechanical characteristic values estimated; and
mechanical characteristic value distribution means for distributing the mechanical characteristic values estimated by the estimation means to the control parameter correction means and the vehicle body deforming means.

20. The vehicle according to claim 19, **characterized in that** the mechanical characteristic value distribution means distributes the mechanical characteristic values based on frequency components of the mechanical characteristic values estimated by the estimation means.

21. The vehicle according to claim 18, 19, or 20, **characterized in that** the vehicle further comprises:

a weight that is movably arranged relative to the vehicle body, and
the vehicle body deforming means changes the shape of the vehicle body by moving the weight in response to the mechanical characteristic values estimated.

22. A characteristic value estimating device that estimates mechanical characteristic values of a weight body mounted on a vehicle that controls attitude of a vehicle body, **characterized in that** the characteristic value estimating device comprises:

a loading portion for loading the weight body such as luggage or a rider;
a load sensor arranged at the loading portion;
a height sensor that measures a height of the weight body; and
estimation means for estimating the mechanical characteristic values of the weight body based on measured values of the load sensor and the height sensor.

23. A characteristic value estimating device that estimates mechanical characteristic values of a weight body mounted on a vehicle that controls attitude of a vehicle body, **characterized in that** the characteristic value estimating device comprises:

estimation means for estimating the mechanical characteristic values of the weight body by using a disturbance observer.

24. A characteristic value estimating device that estimates mechanical characteristic values of a weight body mounted on a vehicle that controls attitude of a vehicle body, **characterized in that** the characteristic value estimating device comprises:

a loading portion for loading the weight body such as luggage or a rider;
a load sensor arranged at the loading portion;
a height sensor that measures a height of the weight body;
direct estimation means for estimating the mechanical characteristic values based on measured values of the load sensor and the height sensor;
indirect estimation means for estimating the mechanical characteristic values with a disturbance observer; and
estimation means for estimating the mechanical characteristic values based on estimated values by the direct estimation means and the indirect estimation means.

25. The characteristic value estimating device according to claim 24, **characterized in that** the characteristic value estimating device further comprises:

error determination means for determining an error in the estimated values by using both of the estimated values estimated by the direct estimation means and the indirect estimation means, and
if one of the estimated values is determined to be erroneous, the estimation means estimates the other estimated value as a mechanical characteristic value.

26. The characteristic value estimating device according to claim 24 or 25, **characterized in that** the estimation means estimates the mechanical characteristic values based on frequency components of the estimated values by the direct estimation means and the indirect estimation means.

27. The characteristic value estimating device according to any one of claims 22 to 26, **characterized in that** the estimation means estimates, as the mechanical characteristic values, a mass of the weight body, a height of center of gravity of the weight body, and a moment of inertia of the weight body.

28. The characteristic value estimating device according to claim 22 or 24, **characterized in that** the characteristic value estimating device further comprises:

an acceleration sensor; and
a tilt angle sensor, and
the estimation means or the direct estimation means estimates the mechanical characteristic values of the weight body based on the measured values of the load sensor and the height sensor, and also based on detected values of the acceleration sensor and the tilt angle sensor.

29. A loaded article determination device, **characterized in that** the loaded article determination device comprises:

the characteristic value estimating device according to any one of claims 22 to 28; and
type determination means for determining a type of the weight body mounted on the vehicle by using the mechanical characteristic values estimated by the characteristic value estimating device.

SENSING: DETECTION OF EFFECT OF DISPLACEMENT OF CENTER OF GRAVITY

**FIG. 1A** DIRECT MEASUREMENT WITH MEASURING INSTRUMENT LOAD METER

LOAD METER

**FIG. 1B** ESTIMATION BASED ON RESULTS OF CONTROL (HISTORY)

REACTION: COUNTERMEASURE AGAINST DISPLACEMENT OF CENTER OF GRAVITY

**FIG. 1C** CORRECTION OF MAIN BODY REFERENCE ANGLE

REFERENCE AXIS

**FIG. 1D** USE OF BALANCER

BALANCER

**FIG. 1E** MOVEMENT OF SEAT

# F I G . 2

LOADING PORTION 13

133
132

OCCUPANT

OPERATING UNIT 30

SEATING FACE 131

CONTROL UNIT 16

BALANCER DRIVE UNIT 18

14

DRIVE MOTOR 12

DRIVE WHEEL 11b

DRIVE WHEEL 11a

121

# F I G . 3

# FIG.4A

# FIG.4B

CENTER OF GRAVITY
OF OCCUPANT

OVERALL CENTER OF GRAVITY

LOAD METERS 51a TO 51e

REFERENCE AXIS

# F I G . 5

```
                    ( CENTER-OF-GRAVITY )
                    (   DISPLACEMENT    )
                    (     CONTROL       )
```

**S11**

MEASURE LOAD
DISTRIBUTION WITH A
PLURALITY OF LOAD METERS
INSTALLED UNDER SEAT

**S12**

CALCULATE FORCE AND
TORQUE ACTING ON
OCCUPANT PORTION,
BASED ON OBTAINED LOAD
DISTRIBUTION DATA

**S13**

EVALUATE AMOUNT OF
EFFECT OF DISPLACEMENT
OF CENTER OF GRAVITY
WITH REFERENCE TO DATA
OBTAINED FROM SENSORS
FOR ATTITUDE CONTROL, ETC.

**S14**

OBTAIN INPUT AND OUTPUT
DATA IN ATTITUDE CONTROL

**S15**

ESTIMATE MAIN
BODY TILTING
TORQUE DISTURBANCE
WITH OBSERVER BASED
ON OBTAINED DATA

**S16**

EVALUATE AMOUNT OF
EFFECT OF DISPLACEMENT
OF CENTER OF GRAVITY
WITH RESPECT TO OBTAINED
DATA BY USING FREQUENCY
ANALYSIS, ETC.

**S17**

BY COMPARING TWO PIECES OF
DATA, DETERMINE AMOUNT OF
EFFECT OF CORRESPONDING
DISPLACEMENT OF
CENTER OF GRAVITY

**S18**

DISTRIBUTE TO EACH ELEMENT
THE AMOUNT OF EFFECT
OF CORRESPONDING
DISPLACEMENT OF
CENTER OF GRAVITY

**S19**

CALCULATE MAIN BODY TILT
ANGLE TO ELIMINATE EFFECT
OF DISPLACEMENT OF
CENTER OF GRAVITY

**S20**

CORRECT TARGET VALUE OF
ATTITUDE CONTROL (SERVO)
TO CALCULATED TILT ANGLE

**S21**

ATTITUDE CONTROL SYSTEM
TILTS MAIN BODY SO THAT
CENTER OF GRAVITY LIES
ON VERTICAL AXIS

**S22**

CALCULATE POSITION OF
BALANCER TO ELIMINATE
EFFECT OF DISPLACEMENT
OF CENTER OF GRAVITY

**S23**

SET TARGET VALUE OF
BALANCER CONTROL TO
CALCULATED POSITION

**S24**

MOVE BALANCER SO THAT
CENTER OF GRAVITY
LIES ON VERTICAL AXIS

**S25**

CALCULATE POSITION OF
SEAT TO ELIMINATE EFFECT
OF DISPLACEMENT OF
CENTER OF GRAVITY

**S26**

SET TARGET VALUE OF
SEAT CONTROL TO
CALCULATED POSITION

**S27**

MOVE SEAT SO THAT
CENTER OF GRAVITY
LIES ON VERTICAL AXIS

```
                         (  END  )
```

# FIG.6

# FIG.7

# FIG.8

# FIG.9

# F I G . 10

# F I G. 11A

# F I G. 11B

# F I G. 11C

F I G. 12A

F I G. 12B

TILT OF PART OF BODY

TRANSLATION OF AXLE
CONNECTING PORTION

SENSING: DETECTION OF EFFECT OF DISPLACEMENT OF CENTER OF GRAVITY

**FIG. 13A** DIRECT MEASUREMENT WITH MEASURING INSTRUMENT

**FIG. 13B** ESTIMATION BASED ON RESULTS OF CONTROL (HISTORY)

LOAD METER

REACTION: COUNTERMEASURE AGAINST DISPLACEMENT OF CENTER OF GRAVITY

**FIG. 13C** CORRECTION OF MAIN BODY REFERENCE ANGLE

**FIG. 13D** USE OF BALANCER

**FIG. 13E** MOVEMENT OF SEAT

BALANCER

SENSING: OBTAINING MECHANICAL CHARACTERISTIC VALUES

FIG. 14A USE OF VALUES MEASURED BY MEASURING INSTRUMENT

FIG. 14B ESTIMATION BASED ON RESULTS OF CONTROL (HISTORY)

REACTION: CORRECTION OF CHARACTERISTIC VALUES OF CONTROL SYSTEM

FIG. 14C CORRECTION OF CONTROL PARAMETERS

FIG. 14D ADJUSTMENT OF VEHICLE WEIGHT DISTRIBUTION

# F I G . 15

HEADREST 133

SEAT BACK 132

LOADING PORTION 13

(WEIGHT 134)

OCCUPANT

OPERATING UNIT 30

SEATING FACE 131

CONTROL UNIT 16

14

DRIVE MOTOR 12

DRIVE WHEEL 11a

DRIVE WHEEL 11b

121

# F I G . 16

# F I G . 17A

SITTING HEIGHT METER 52

# F I G . 17B

133

SITTING HEIGHT METER 52

132

LOADING PORTION 13

131

LOAD METER 51

133

132

WEIGHT 134

131

FIG.18A

© CONTROLLABLE ALSO WHEN
CHANGING HEIGHT OF SEAT

FIG.18B

# F I G . 19

CONTROL SYSTEM
CHARACTERISTIC VALUE
CORRECTION PROCESSING

**S11**

MEASURE WEIGHT AND HEIGHT OF
LOADED ARTICLE WITH LOAD METER
AND SITTING HEIGHT METER
INSTALLED ON LOADING PORTION

**S12**

ESTIMATE MASS, FIRST MOMENT,
AND MOMENT OF INERTIA OF
LOADED ARTICLE BASED
ON OBTAINED DATA

**S13**

CALCULATE MASS, FIRST MOMENT,
AND MOMENT OF INERTIA OF
CONTROLLED TARGET OBJECT

**S14**

OBTAIN INPUT AND OUTPUT
DATA IN ATTITUDE CONTROL

**S15**

ESTIMATE DISTURBANCE
WITH OBSERVER BASED
ON OBTAINED DATA

**S16**

DETERMINE MASS, FIRST MOMENT,
AND MOMENT OF INERTIA OF
CONTROLLED TARGET OBJECT
BASED ON OBTAINED DATA

**S17**

BY COMPARING TWO PIECES OF DATA,
DETERMINE MASS, FIRST MOMENT, AND MOMENT
OF INERTIA OF CONTROLLED TARGET OBJECT

**S18**

DISTRIBUTE TO EACH ELEMENT CORRESPONDING
DIFFERENCE BETWEEN OBTAINED VALUE
AND NOMINAL VALUE (ASSUMED VALUE)

**S19**

RECALCULATE CONTROL PARAMETERS
SUITABLE FOR NEWLY OBTAINED
MECHANICAL CHARACTERISTIC VALUES

**S20**

INTRODUCE OBTAINED CONTROL
PARAMETERS TO CONTROL SYSTEM

**S21**

CALCULATE LOCATION OF EACH
WEIGHT SO AS TO MINIMIZE DIFFERENCE
BETWEEN THE TWO VALUES

**S22**

SET TARGET VALUE OF EACH
WEIGHT TO CALCULATED POSITION

**S23**

MOVE EACH WEIGHT TO TARGET
POSITION TO APPROXIMATE
MECHANICAL CHARACTERISTIC
VALUES TO NOMINAL VALUES

RETURN

# F I G . 20

### S31

DISTURBANCE OBSERVER

ESTIMATED DISTURBANCE VALUE $\hat{\vec{d}}$

### S32

SENSOR FOR VEHICLE CONTROL

VEHICLE STATE QUANTITIES $\vec{\xi}$

### S33

LEAST-SQUARES METHOD

VARIATION QUANTITY MATRIX $\Lambda$

### S34

ESTIMATION OF MECHANICAL CHARACTERISTIC VALUE VARIATIONS

VARIATIONS OF RESPECTIVE MECHANICAL
CHARACTERISTIC VALUES OF MAIN BODY

MASS $\Delta m_1$

FIRST MOMENT $\Delta(m_1 l_1)$

MOMENT OF INERTIA $\Delta(I_1 + m_1 l_1^2)$

# FIG. 21

DISTURBANCE $\vec{d}$

INPUT $\vec{u}$ → ACTUAL CONTROLLED OBJECT → OUTPUT $\vec{y}$ (MEASURED VALUES)

CONTROLLER

ESTIMATOR → ESTIMATED DISTURBANCE VALUE $\hat{\vec{d}}$

CONTROLLED OBJECT MODEL

INPUT $\vec{u}$

OUTPUT $\hat{\vec{y}}$ (THEORETICAL VALUES)

23

DISTURBANCE OBSERVER

CONTROL ECU

20

# F I G . 22A

| WEIGHTING (EXAMPLE) | MASS $m_1$ | FIRST MOMENT $m_1 l_1$ | MOMENT OF INERTIA $I_1 + m_1 l_1^2$ |
|---|---|---|---|
| (1) MEASURING INSTRUMENT | 90% | 30% | 50% |
| (2) DISTURBANCE OBSERVER | 10% | 70% | 50% |

# F I G . 22B

DISTURBANCE OBSERVER 23

MEASURING INSTRUMENT

GAIN

$f_2$  $f_1$  FREQUENCY

# F I G . 23

PARAMETER CHANGE

WEIGHT ADJUSTMENT

GAIN

$f_3$  $f_4$  FREQUENCY

EP 2 017 172 A1

# FIG.24

CONTROLLED OBJECT: VEHICLE
COMPLETE OBSERVING SYSTEM

INPUT
$\vec{u}$

OUTPUT
(OBSERVED
QUANTITIES)
$\vec{x}$

$$\dot{\vec{x}}=A\vec{x}+B\vec{u}$$
$$\vec{y}=\vec{x}$$

CONTROLLER
STATE FEEDBACK

$$\vec{u}=-G(\vec{x}-\vec{x}^{*})$$

FEEDBACK GAIN G

TARGET VALUE
$\vec{x}^{*}$

CONTROL PARAMETER SETTING SYSTEM

A) CHARACTERISTICS OPTIMIZATION
PARAMETER CALCULATION

B) CHARACTERISTICS INVARIANCE
PARAMETER CALCULATION

## INTERNATIONAL SEARCH REPORT

| | International application No. |
|---|---|
| | PCT/JP2007/055201 |

A. CLASSIFICATION OF SUBJECT MATTER
*B62K17/00*(2006.01)i, *B60L15/20*(2006.01)i, *B62K3/00*(2006.01)i, *G05D1/08*(2006.01)i

According to International Patent Classification (IPC) or to both national classification and IPC

B. FIELDS SEARCHED

Minimum documentation searched (classification system followed by classification symbols)
B62K17/00, B60L15/20, B62K3/00, G05D1/08

Documentation searched other than minimum documentation to the extent that such documents are included in the fields searched
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2003-237665 A (Sigma Solutions Co., Ltd.),<br>27 August, 2003 (27.08.03),<br>Claim 4; Par. Nos. [0015] to [0017];<br>all drawings<br>(Family: none) | 1-7,9<br>8,10 |
| Y<br>A | JP 2001-191276 A (Sony Corp.),<br>17 July, 2001 (17.07.01),<br>Claims 19, 21; Par. Nos. [0237], [0261] to<br>[0308]; Figs. 29 to 39<br>& US 6505098 B1          & EP 1155786 A1<br>& WO 2001/032366 A1      & CN 1148281 C | 1-7,9<br>8,10 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>14 June, 2007 (14.06.07) | Date of mailing of the international search report<br>26 June, 2007 (26.06.07) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2007/055201 |

C (Continuation).　DOCUMENTS CONSIDERED TO BE RELEVANT

| Category* | Citation of document, with indication, where appropriate, of the relevant passages | Relevant to claim No. |
| --- | --- | --- |
| Y | JP 2005-138630 A (Sony Corp.), 02 June, 2005 (02.06.05), Abstract; Par. Nos. [0154] to [0158]; Figs. 1, 3, 30 to 31 & US 2005/0121238 A1 & EP 1529556 A2 | 2,4-7,9 |
| Y | JP 6-175724 A (Tsubakimoto Chain Co.), 24 June, 1994 (24.06.94), Par. Nos. [0034] to [0046]; all drawings (Family: none) | 3,7 |
| Y | JP 2004-129435 A (Sony Corp.), 22 April, 2004 (22.04.04), Claims 9 to 15; Par. Nos. [0027] to [0037], [0168] to [0240]; Figs. 26 to 44 (Family: none) | 5,9,18-19,21 |
| Y | JP 2006-1385 A (Sony Corp.), 05 January, 2006 (05.01.06), Full text; all drawings (Family: none) | 6,9 |
| A | JP 2005-335471 A (Sony Corp.), 08 December, 2005 (08.12.05), Par. Nos. [0049], [0074], [0113] (Family: none) | 8,10 |
| X Y A | JP 3260190 B2 (Hitachi, Ltd.), 25 February, 2002 (25.02.02), Full text; all drawings (Family: none) | 11-12,17 13-15,18-19, 21 16,20,25-26 |
| X Y A | JP 2005-96894 A (Toyota Industries Corp.), 14 April, 2005 (14.04.05), Abstract; Par. Nos. [0014] to [0025]; all drawings (Family: none) | 22,27 13,15,24, 28-29 16,20,25-26 |
| Y A | JP 2000-125406 A (Toyo Electric Mfg. Co., Ltd.), 28 April, 2000 (28.04.00), Abstract (Family: none) | 14,15 16,20 |
| X Y A | JP 11-252716 A (Toyo Electric Mfg. Co., Ltd.), 17 September, 1999 (17.09.99), Abstract; Claim 1; Par. Nos. [0010], [0013] to [0018] (Family: none) | 23,27 24 25-26 |

Form PCT/ISA/210 (continuation of second sheet) (April 2005)

**INTERNATIONAL SEARCH REPORT**

| International application No. |
|---|
| PCT/JP2007/055201 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2006-123854 A  (Matsushita Electric Industrial Co., Ltd.), 18 May, 2006 (18.05.06), Par. Nos. [0002] to [0013], [0028] to [0088]; all drawings (Family: none) | 28 |
| Y | JP 2959469 B2  (NEC Corp.), 06 October, 1999 (06.10.99), Full text; all drawings (Family: none) | 29 |

Form PCT/ISA/210 (continuation of second sheet) (April 2005)

| INTERNATIONAL SEARCH REPORT | International application No. |
|---|---|
| | PCT/JP2007/055201 |

---

**Box No. II        Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

---

**Box No. III        Observations where unity of invention is lacking (Continuation of item 3 of first sheet)**

This International Searching Authority found multiple inventions in this international application, as follows:

The special technical feature of the inventions in claims 1-10 is "the displacement amount calculation means" and "the control means for position of the center of gravity".
The special technical feature of the inventions in claims 11-21 is "the estimating means" and "the control system characteristic quantity correction means".
The special technical feature of the inventions in claims 22, 24-29 is "the estimating means for estimating the dynamic characteristic quantity based on the values measured by the load sensor and the height sensor".
(continued to extra sheet)

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
the

☐ The additional search fees were accompanied by the applicant's protest and, where applicable, payment of a protest fee..

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (April 2005)

| INTERNATIONAL SEARCH REPORT | International application No. |
|---|---|
| | PCT/JP2007/055201 |

Continuation of Box No.III of continuation of first sheet(2)

The special technical feature of the invention in claim 23 is "the estimating means for estimating using the disturbance observer".
These inventions are not considered to be so linked as to form a single general inventive concept since they are not so technically related as to involve one or more of the same or corresponding special technical features.

Form PCT/ISA/210 (extra sheet) (April 2005)

**EP 2 017 172 A1**

**Patent documents cited in the description**

- JP 2004 A
- JP 276727 A
- JP 2004129435 A